# EUROPEAN PATENT SPECIFICATION

(11) **EP 3 586 220 B1**
(45) Date of publication and mention of the grant of the patent: **17.01.2024**
(21) Application number: 18776851.0
(22) Date of filing: 27.03.2018
(51) Int. Cl.: G06F 3/0481, G06F 3/0488, G06F 3/0486, H04N 23/60, H04N 23/69, H04N 23/63

(54) **ELECTRONIC DEVICE AND CONTROL METHOD THEREOF**
ELEKTRONISCHE VORRICHTUNG UND STEUERUNGSVERFAHREN DAFÜR
DISPOSITIF ÉLECTRONIQUE ET PROCÉDÉ DE COMMANDE ASSOCIÉ

(30) Priority: 28.03.2017 KR 20170039183
(43) Date of publication of application: 01.01.2020
(73) Proprietor: Samsung Electronics Co., Ltd., Suwon-si, Gyeonggi-do 16677 (KR)
(72) Inventor: CHOI, Na Ri, Seoul 05808 (KR); LEE, Ho Young, Seoul 05265 (KR); HWANG, Ho Ik, Suwon-si, Gyeonggi-do 16694 (KR); KI, Dae Hong, Suwon-si, Gyeonggi-do 16701 (KR); YANG, Chang Mo, Anyang-si, Gyeonggi-do 14040 (KR); CHUN, Chang Hyun, Hwaseong-si, Gyeonggi-do 18385 (KR); CHOI, Jun Ho, Seoul 05813 (KR)
(74) Representative: D'Halleweyn, Nele Veerle Trees Gertrudis
(86) International application number: PCT/KR2018/003604
(87) International publication number: WO 2018/182292

(56) References cited:
- EP-A1- 2 629 214
- EP-A2- 2 405 299
- KR-A- 20140 115 683
- KR-A- 20160 133 781
- KR-B1- 101 530 517
- US-A1- 2015 091 835
- US-A1- 2015 334 291

## Description

### Technical Field

The present disclosure relates, generally, to an operating method for enabling and executing a preset function by moving an icon displayed on an electronic device, to a device for performing the same, and, more particularly, to an operating method for adjusting various camera settings to take an image.

### Background Art

In recent years, with the diversification of functions of portable electronic devices (e.g., smartphones, tablet personal computers (PCs), and the like), electronic devices basically equipped with a camera module having an image capture function have been widely used. Furthermore, the development of electronic devices and photographing functions using electronic devices has been accelerated to meet increasing user demands for diversification and high performance.

For example, smartphones provide a user interface relating to photographing functions by using a display included therein so that users can easily control complex camera settings.

The above information is presented as background information only to assist with an understanding of the present disclosure. No determination has been made, and no assertion is made, as to whether any of the above might be applicable as prior art with regard to the present disclosure.

US 2015/091835 A1 discloses an apparatus configured to activate and display an option menu when a touch event through the photographing button is input for greater than a preset time. A user may move the touch event in a left or right direction on the option menu to change an option value and the apparatus may express a result in which the option value changed according to movement of the touch event is reflected in real time. The user may designate option menus such as a white balance, brightness, exposure, resolution, ISO as an option menu by the photographing button in a photographing mode, and an output order thereof may be determined and set. Another option menu set to a next order is additionally activated and expressed according to movement of a touch event of the user. For example, when the touch event is moved in a direction other than a moving direction for changing the option value, the activated option menu is removed from the screen and a new option menu having a next order according to the movement is activated. When the touch event is released, the option value may be set to a value corresponding to the point. When release of the input touch event is detected, the touch device may execute a photographing function of the photographing button based on an option value corresponding to a point in which the touch event in the option menu is released and express an execution screen thereof, i.e., a screen photographed as the changed option value.

EP2405299 discloses an information processing device including an imaging section configured to image an object, a display section configured to display at least an icon for controlling the imaging section, an operation section configured to acquire a first operation and a second operation on the icon, and a controller configured to, when the operation section has acquired the first operation, set a timer in accordance with an operation amount of the first operation and change a display of the icon on the display section in accordance with a progress of the timer, and to, when the operation section has acquired the second operation or when the timer has expired, cause the imaging section to image the object.

### Disclosure of Invention

### Technical Problem

When a user takes an image using an electronic device, the user may adjust various camera settings to take an image. For example, the user may adjust a zoom level or an exposure value.

However, in certain photographing modes, the user may not directly adjust a zoom level or an exposure value through a user interface. Consequently, the user may have the inconvenience of having to adjust the corresponding function after accessing settings included in the user interface.

### Solution to Problem

In accordance with an aspect of the present disclosure, an electronic device is provided. The electronic device includes a display, at least one processor, and a memory, wherein the memory is configured to store instructions that, when executed by the electronic device, cause the at least one processor to control the display to display a first icon relating to image capture, enable a preset function and control the display to display a first object representing an execution step of the preset function, in response to movement of the first icon by a predetermined distance in a first direction, and execute the preset function and control the display to modify and display the first object, in response to movement of the first icon beyond the predetermined distance.

In accordance with another aspect of the present disclosure, a method for controlling an electronic device is provided. The method includes displaying a first icon relating to image capture, enabling a preset function and displaying a first object representing an execution step of the preset function, in response to movement of the first icon by a predetermined distance in a first direction, and executing the preset function and modifying and displaying the first object, in response to movement of the first icon beyond the predetermined distance.

The invention is defined by the independent claims. Further aspects of the invention are outlined in the dependent claims.

### Advantageous Effects of Invention

According to an embodiment of the present disclosure, an electronic device may enable and execute a preset function in response to movement of an icon.

According to an embodiment of the present disclosure, the electronic device may execute a different preset function in response to movement of the icon in a different direction.

According to an embodiment of the present disclosure, in response to movement of an icon, the electronic device may execute a function relating to a function executed by the corresponding icon.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

The above and other aspects, features, and advantages of certain embodiments of the present disclosure will be more apparent from the following description taken in conjunction with the accompanying drawings, in which:
FIG. 1A is an illustration of an electronic device enabling a preset function in response to a user input for changing a position of an icon, according to an embodiment;
FIG. 1B is an illustration of an electronic device determining whether to change a zoom level, based on a region where a first icon is located, according to an embodiment;
FIG. 2 is a block diagram of an electronic device according to an embodiment;
FIG. 3 is an illustration of functions executed by an electronic device after a first icon stops, according to an embodiment;
FIG. 4 is an illustration of various preset functions enabled by an electronic device in response to movement of a first icon, according to an embodiment;
FIG. 5 is an illustration of an electronic device implementing a speed at which a preset function is applied, based on a moving speed of a first icon, according to an embodiment;
FIG. 6 is an illustration of various forms of a second object displayed on an electronic device, according to an embodiment;
FIG. 7 is an illustration of an electronic device executing a preset function in response to movement of a first icon in a second direction, according to an embodiment;
FIG. 8 is an illustration of an electronic device executing a preset function in response to movement of a first icon in a third direction, according to an embodiment;
FIG. 9 is an illustration of an electronic device executing a preset function in response to movement of a second icon, according to an embodiment;
FIG. 10 is an illustration of an electronic device executing a preset function in response to movement of a third icon, according to an embodiment;
FIG. 11 is a flowchart of a method of an electronic device enabling and executing a preset function in response to a change in the position of an icon, according to an embodiment;
FIG. 12 is a block diagram of an electronic device in a network environment, according to an embodiment;
FIG. 13 is a block diagram of an electronic device, according to an embodiment; and
FIG. 14 illustrates is an illustration of a block diagram of a program module according to various embodiments.

### Best Mode for Carrying out the Invention

Hereinafter, various embodiments of the present disclosure may be described with reference to accompanying drawings. With regard to description of drawings, similar elements may be marked by similar reference numerals. The terms of a singular form may include plural forms unless otherwise specified. In this disclosure, the expressions "A or B", "at least one of A or/and B", or "one or more of A or/and B", and the like may include any and all combinations of one or more of the associated listed items. The terms, such as "first", "second", and the like may be used to refer to various elements regardless of the order and/or the priority and to distinguish the relevant elements from other elements, but do not limit the elements. When an element (e.g., a first element) is referred to as being "(operatively or communicatively) coupled with/to" or "connected to" another element (e.g., a second element), the element may be directly coupled with/to or connected to the other element or an intervening element (e.g., a third element) may be present.

According to the situation, the expression "configured to" used in this disclosure may be used as, for example, the expression "suitable for", "having the capacity to", "adapted to", "made to", "capable of", or "designed to" in hardware or software. The expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).According to various embodiments, the electronic device may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, media boxes (e.g., Samsung HomeSync^{™}, Apple TV^{™}, or Google TV^{™}), game consoles (e.g., Xbox^{™} or PlayStation^{™}), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, drones, automatic teller's machines (ATMs), or points of sales (POSs) of stores. According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be a flexible electronic device or a combination of two or more above-described devices. Furthermore, an electronic device according to an embodiment of this disclosure may not be limited to the above-described electronic devices. In this disclosure, the term "user" may refer to a person who uses an electronic device or may refer to a device (e.g., an artificial intelligence electronic device) that uses the electronic device.

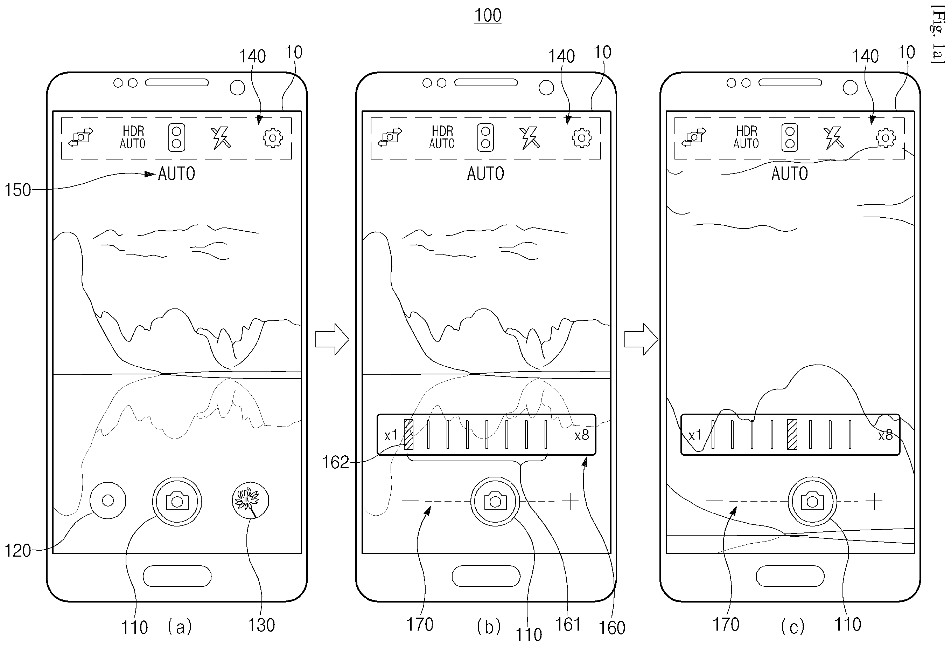

FIG. 1A is an illustration of an electronic device enabling a preset function in response to a user input for changing a position of an icon, according to an embodiment.

Referring to panel (a) in FIG. 1A, an electronic device 100 may display, on a display 10, a user interface for capturing an image. The electronic device 100 may be an electronic device, such as a smartphone, a tablet PC, a camera, or the like, which includes a camera module. In the following description, the electronic device 100 is, for example, a smartphone.

The image capture user interface according to an embodiment may include, for example, a first icon 110, a second icon 120, and/or a third icon 130. The first icon 110 may be, for example, an icon for capturing a still image. The second icon 120 may be an icon for recording a video, and the third icon 130 may be an icon for confirming captured images.

The image capture user interface according to an embodiment may include, for example, icons 140 that correspond to modifiable photographic elements in the current photographing mode. The icons 140 corresponding to the modifiable photographic elements in the current photographing mode may include, for example, an icon for switching between front and rear cameras, an icon for enabling high dynamic range (HDR), an icon for enabling a flash, an icon for settings, and the like.

Furthermore, the image capture user interface according to an embodiment may include an icon or text 150 for explaining the currently-set photographing mode.

When an image capture function is enabled, the electronic device 100 according to an embodiment may activate the camera module, convert light incident through the camera module into an image signal, perform image processing on the image signal, convert the image signal into a displayable image, and display the image on the display 10. Accordingly, the electronic device 100 may display the above-described image capture user interface and the image on the display 10 in such a manner that the image is superimposed on the user interface.

Referring to panel (b) of FIG. 1A, the electronic device 100 may enable a preset function in response to movement of the first icon 110 by a predetermined distance in a first direction based on a user input. The first direction may refer to, for example, a direction in which the first icon 110 moves to the right.

The predetermined distance may be, for example, a distance corresponding to 13 density-independent pixels (dps). A density-independent pixel may refer to, for example, a virtual pixel unit that allows independent sizing without the influence of the resolution of a display when sizes of elements or an arrangement thereof is specified to the display. For example, 13 dps may indicate about 40 pixels in a display that supports a resolution of 2560 x 1440.

The preset function enabled by the electronic device 100 may include at least one of, for example, a zoom function, an exposure compensation function, a self-photographing time setting function, a sensitivity adjustment function, an F-number adjustment function, and a shutter speed adjustment function. However, the preset function is not limited thereto.

Referring to panel (b) of FIG. 1A, the electronic device 100 may display a first object 160 corresponding to the preset function on the display 10 at the same time as, or subsequent to, enabling the preset function.

For example, the electronic device 100 may enable a zoom function in response to the movement of the first icon 110 by the predetermined distance in the first direction based on the user input. Simultaneously or sequentially, the electronic device 100 may display the first object 160 corresponding to the zoom function on the display 10. The first object 160 corresponding to the zoom function may display, for example, all zoom levels 161 that the electronic device 100 is capable of implementing and a current zoom level 162 selected by the electronic device 100.

The electronic device 100 may end the displaying of the second icon 120 and the third icon 130 and may display a second object 170 corresponding to the preset function at the same time as, or subsequent to, enabling the preset function. The second object 170 corresponding to the preset function may display, for example, a direction in which the electronic device 100 raises or lowers the intensity at which the preset function is applied. Accordingly, a user may easily identify the moving direction of the first icon 110.

Referring to panel (c) of FIG. 1A, the electronic device 100 may execute the preset function in response to movement of the first icon 110 beyond the predetermined distance in the first direction based on a user input.

For example, the electronic device 100 may execute the zoom function when the first icon 110 moves more than the predetermined distance in the first direction in response to the user input after the zoom function is enabled. That is, the electronic device 100 may magnify or reduce the image obtained through the camera module and displayed on the display 10.

Referring to panel (c) FIG. 1A, the electronic device 100 may gradually magnify the image displayed on the display 10, in response to additional movement of the first icon 110 based on a user input.

Simultaneously or sequentially, the electronic device 100 may modify the first object 160 corresponding to the preset function. For example, the electronic device 100 may display the increase in the zoom level by moving the current zoom level 162 selected by the electronic device 100 to the right.

When the first icon 110 continues to move beyond the predetermined distance based on a user input, the electronic device 100 may adjust an execution step of the preset function, based on the moving distance.

For example, when the first icon 110 continues to move toward the plus (+) sign, the electronic device 100 may raise the intensity at which the preset function is applied. In contrast, when the first icon 110 continues to move toward the minus (-) sign, the electronic device 100 may lower the intensity at which the preset function is applied.

Accordingly, when the preset function is a zoom function, the electronic device 100 may move the current zoom level 162 displayed on the first object 160 to a higher level when the user moves the first icon 110 toward the plus (+) sign. Simultaneously or sequentially, the electronic device 100 may gradually magnify the image obtained through the camera module and displayed on the display 10.

In the same way, the electronic device 100 may move the current zoom level 162 displayed on the first object 160 to a lower level when the user moves the first icon 110 toward the minus (-) sign. Simultaneously or sequentially, the electronic device 100 may gradually reduce the image obtained through the camera module and displayed on the display 10.

Alternatively, when the electronic device 100 is equipped with a camera module that supports an optical zoom function, the electronic device 100 may execute optical zoom according to the above-described operation.

However, the present disclosure is not limited thereto. For Example, when the first icon 110 moves more than the predetermined distance based on a user input, the electronic device 100 may continuously execute a zoom function, irrespective of the movement of the first icon 110. That is, the electronic device 100 may gradually increase or decrease the zoom level when the user no longer moves the first icon 110 to the right and the moving distance exceeds the predetermined distance.

When the first icon 110 continues to move beyond the predetermined distance, the electronic device 100 may adjust an execution speed of the preset function, based on the moving distance.

For example, the electronic device 100 may make an adjustment to gradually increase the speed at which the zoom level is increased as the first icon 110 moves toward the plus (+) sign. When the first icon 110 is located at the point where the plus (+) sign is displayed, the electronic device 100 may increase the zoom level at the highest speed. In the same way, the electronic device 100 may make an adjustment to gradually increase the speed at which the zoom level is decreased as the first icon 110 moves toward the minus (-) sign. When the first icon 110 is located at the point where the minus (-) sign is displayed, the electronic device 100 may decrease the zoom level at the highest speed.

However, the present disclosure is not limited thereto. For example, the electronic device 100 may specify reference positions for the speed of change in the zoom level to different regions other than the points where the plus (+) sign and the minus (-) sign are displayed. Furthermore, the electronic device 100 may allow the speed of change in the zoom level to always remain the same.

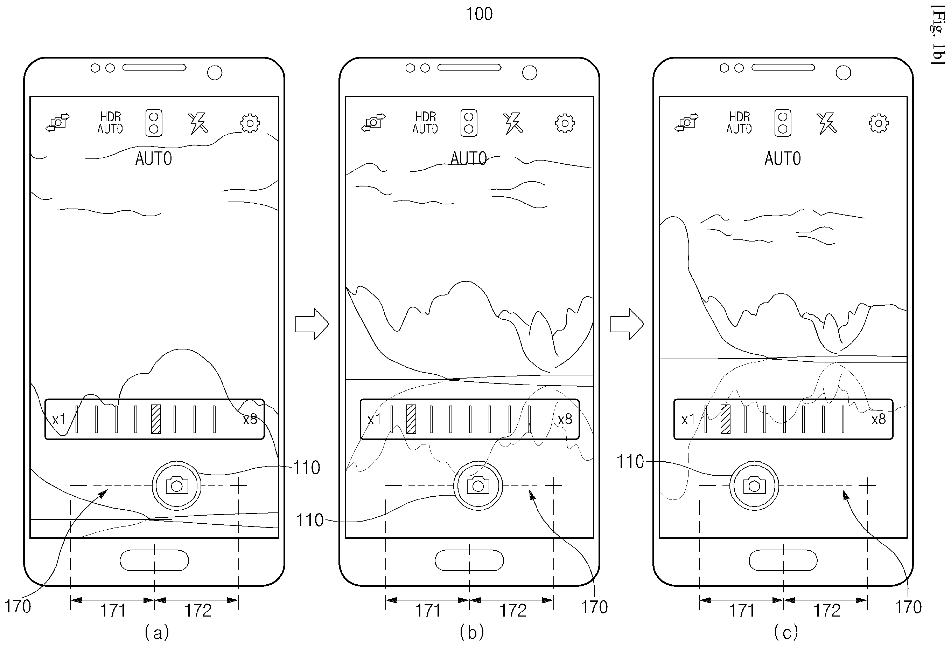

FIG. 1B is an illustration of an electronic device determining whether to change a zoom level, based on a region where a first icon is located, according to an embodiment.

Referring to FIG. panel (a) of 1B, the second object 170 may be divided into a first section 171 and a second section 172. The first section 171 may range from the point where the minus (-) sign is displayed to the point where the first icon 110 is located first, and the second section 172 may range from the point where the plus (+) sign is displayed to the point where the first icon 110 is located first.

The electronic device 100 may increase a zoom level when the first icon 110 moves in the second section 172 toward the point where the plus (+) sign is displayed, based on a user input.

Referring to panel (b) of FIG. 1B, the electronic device 100 may maintain the current zoom level when the first icon 110 moves in the second section 172 toward the first section 171 based on a user input.

Referring to panel (c) of FIG. 1B, the electronic device 100 may decrease the zoom level when the first icon 110 enters the first section 171 based on a user input.

In the same way, the electronic device 100 may decrease the zoom level when the first icon 110 moves in the first section 171 toward the point where the minus (-) sign is displayed. The electronic device 100 may maintain the current zoom level when the first icon 110 moves in the first section 171 toward the second section 172. The electronic device 100 may increase the zoom level when the first icon 110 enters the second section 172.

When the first icon 110 is located in the section 171 or 172 included in the second object 170, the first icon 110 may move while overlapping the second object 170, or may move within a predetermined distance from the second object 170 without overlapping the second object 170.

However, the present disclosure is not limited thereto. According to an embodiment, irrespective of the sections 171 and 172, the electronic device 100 may increase a zoom level when the first icon 110 moves toward the plus (+) sign based on a user input and may decrease the zoom level when the first icon 110 moves toward the minus (-) sign based on a user input.

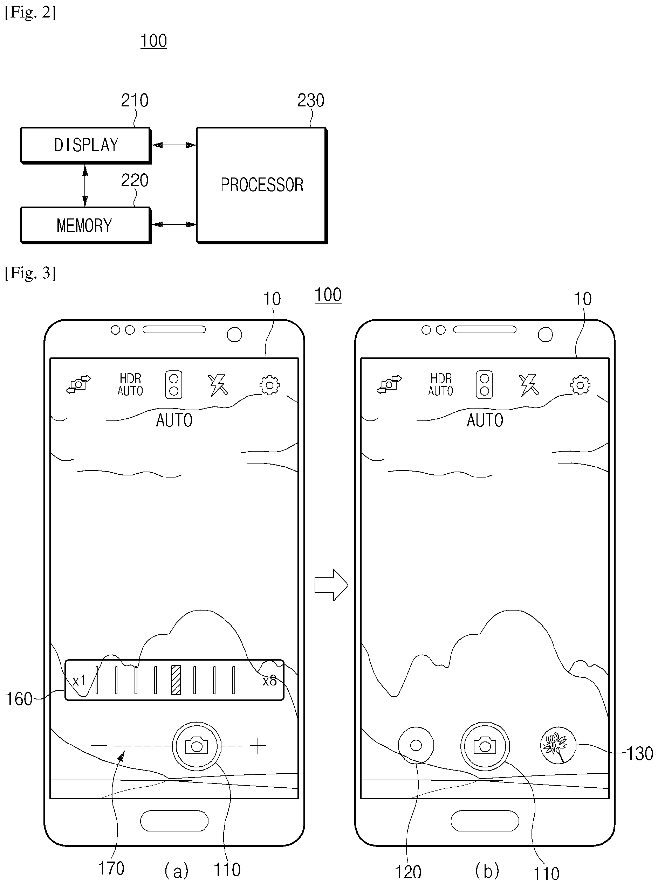

FIG. 2 is a block diagram of an electronic device according to an embodiment.

Referring to FIG. 2, the electronic device 100 may include a display 210, a memory 220, and a processor 230. Without being limited thereto, however, the electronic device 100 may omit some of the elements illustrated in FIG. 2, or may further include other elements. For example, the electronic device 100 may further include a sensor module (e.g., a gesture sensor, a gyro sensor, or the like) or a power supply.

The display 210 may include, for example, a liquid crystal display (LCD), a light-emitting diode (LED) display, an organic LED (OLED) display, a microelectromechanical systems (MEMS) display, a transparent display, or an electronic paper display. The display 210 may include a touch screen and may receive, for example, a touch, gesture, proximity, or hovering input using an electronic pen or a part of a user's body.

The display 210 may display an image under the control of the processor 230. Furthermore, the display 210 may display a user interface and various icons and objects relating to image capture.

The memory 220 may store commands or data associated with at least one other element of the electronic device 100.

The memory 220 may store user interfaces that correspond to various applications executed by the electronic device 100.

The processor 230 may control a plurality of hardware or software elements connected thereto and may process and compute a variety of data, by driving, for example, an operating system or application programs.

The processor 230 may activate or execute various functions included in the electronic device 100, in response to movement of an icon based on a user input. In addition, the processor 230 may control the display 210 to modify and display user interfaces or icons in response to the activation or execution of the functions.

FIG. 3 is an illustration of functions executed by an electronic device after a first icon stops, according to an embodiment.

Referring to panel (a) of FIG. 3, the electronic device 100 may enable and execute a zoom function in response to movement of the first icon 110 beyond a predetermined distance based on a user input. That is, the electronic device 100 may display a zoomed-in image and may display the first and second objects 160 and 170 relating to the zoom function.

In this state, the electronic device 100 may perform preset functions when the user stops moving the first icon 110.

Referring to panel (b) of FIG. 3, in response to release of the user's touch and drag input for moving the first icon 110, the electronic device 100 may display the first icon 110 at the position where the first icon 110 was first displayed before the movement. Simultaneously or sequentially, the electronic device 100 may display, on the display 10, the second icon 120 and the third icon 130 that have not been displayed.

The electronic device 100 may fix the zoom level at the time when the first icon 110 stops. Accordingly, the user may take a still image at a zoom level selected by touching the first icon 110 after the first icon 110 moves to the position where the first icon 110 was first displayed.

The electronic device 100 performs an operation of capturing a still image, in response to the release of the user's touch and drag input for moving the first icon 110. That is, the user may take an image without an operation of touching the first icon 110 once more for photographing.

Depending on options, the electronic device 100 may move the first icon 110 to the first position as described above when the first icon 110 stops, or may perform an operation of capturing a still image, in response to the first icon 110 stopping.

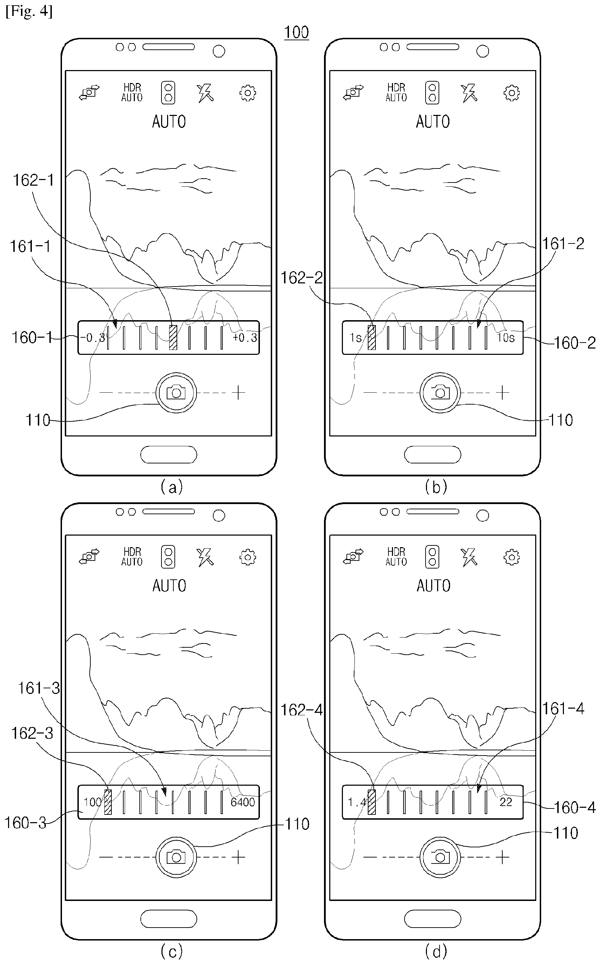

FIG. 4 is an illustration of various preset functions enabled by an electronic device in response to movement of a first icon, according to an embodiment.

A preset function enabled and executed by the electronic device 100 according to an embodiment in response to movement of the first icon 110 relating to image capture may be, for example, a function of sequentially adjusting the intensity at which an image capture function is applied after being executed.

For example, the preset function may include at least one of, for example, a zoom function, an exposure compensation function, a self-photographing time setting function, a sensitivity adjustment function, an F-number adjustment function, and a shutter speed adjustment function.

Referring to panel (a) of FIG. 4, the electronic device 100 may enable an exposure compensation function in response to movement of the first icon 110 by a predetermined distance based on a user input. The exposure compensation function may be executed by adjusting, for example, an exposure value (EV).

The electronic device 100 may display a first object 160-1 representing a full range 161-1 for adjustment of an exposure value (EV) and the current exposure value (EV) 162-1 at the same time as, or subsequent to, enabling the exposure compensation function. An EV may be adjusted, for example, by a step of 0.3 EV.

The electronic device 100 may set an EV step to a higher step when the first icon 110 moves more than the predetermined distance toward the plus (+) sign, and may set an EV step to a lower step when the first icon 110 moves more than the predetermined distance toward the minus sign (-).

Referring to panel (b) of FIG. 4, the electronic device 100 may enable a self-timer time setting function in response to movement of the first icon 110 by a predetermined distance based on a user input.

The electronic device 100 may display a first object 160-2 representing an adjustable full time range 161-2 and the currently-selected time 162-2 at the same time as, or subsequent to, enabling the self-timer time setting function.

The electronic device 100 may set self-timer setting time to a longer period of time when the first icon 110 moves more than the predetermined distance toward the plus (+) sign, and may set self-timer setting time to a shorter period of time when the first icon 110 moves more than the predetermined distance toward the minus sign (-).

Referring to panel (c) of FIG. 4, the electronic device 100 may enable a sensitivity setting function in response to movement of the first icon 110 by a predetermined distance based on a user input.

The electronic device 100 may display a first object 160-3 representing an adjustable full sensitivity range 161-3 and the currently-selected sensitivity 162-3 at the same time as, or subsequent to, enabling the sensitivity setting function.

The electronic device 100 may set sensitivity to a higher level when the first icon 110 moves more than the predetermined distance toward the plus (+) sign, and may set sensitivity to a lower level when the first icon 110 moves more than the predetermined distance toward the minus sign (-).

Referring to panel (d) of FIG. 4, the electronic device 100 may enable an F-number setting function in response to movement of the first icon 110 by a predetermined distance based on a user input.

The electronic device 100 may display a first object 160-4 representing an adjustable full F-number range 161-4 and the currently-selected F-number 162-4 at the same time as, or subsequent to, enabling the F-number setting function.

The electronic device 100 may set an F-number to a higher level when the first icon 110 moves more than the predetermined distance toward the plus (+) sign, and may set an F-number to a lower level when the first icon 110 moves more than the predetermined distance toward the minus sign (-).

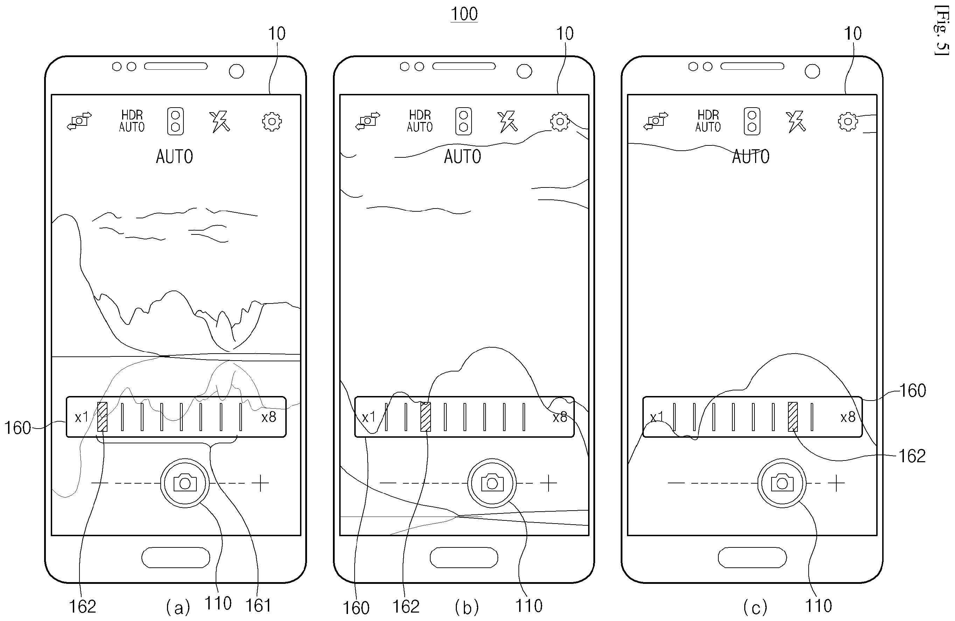

FIG. 5 is an illustration of an electronic device implementing a speed at which a preset function is applied, based on a moving speed of a first icon, according to an embodiment.

Referring to panel (a) of FIG. 5, the electronic device 100 may enable a preset function in response to movement of the first icon 110 by a predetermined distance in the first direction based on a user input.

For example, the electronic device 100 may enable a zoom function in response to the movement of the first icon 110 by the predetermined distance in the first direction. Simultaneously or sequentially, the electronic device 100 may display the first object 160 corresponding to the zoom function on the display 10. The first object 160 corresponding to the zoom function may display, for example, all zoom levels 161 that the electronic device 100 is capable of implementing the current zoom level 162 selected by the electronic device 100.

The electronic device 100 may execute the enabled function in response to movement of the first icon 110 beyond the predetermined distance in the first direction based on a user input. When executing the preset function, the electronic device 100 may adjust the speed at which the function is applied, based on the moving speed of the first icon 110.

For example, the electronic device 100 may execute the zoom function when the first icon 110 moves more than the predetermined distance in the first direction in response to a user input after the zoom function is enabled. When the first icon 110 continues to move in the first direction, the electronic device 100 may magnify or reduce an image obtained through the camera module and displayed on the display 10.

Panel (b) of FIG. 5 is an illustration where a user moves the first icon 110 at a first speed.

Referring to panel (b) of FIG. 5, the electronic device 100 may modify the current zoom level 162 included in the first object 160 to a third level, based on the moving speed of the first icon 110. Simultaneously or sequentially, the electronic device 100 may magnify the image by applying the third zoom level.

Panel (c) of FIG. 5 is an illustration where the user moves the first icon 110 at a second speed. For example, the second speed may be higher than the first speed.

Referring to panel (c) of FIG. 5, the electronic device 100 may modify the current zoom level 162 included in the first object 160 to a seventh level, based on the moving speed of the first icon 110. Simultaneously or sequentially, the electronic device 100 may magnify the image by applying the seventh zoom level.

As described above, based on the moving speed of an icon, the electronic device 100 may differently apply the speed at which the corresponding function is applied.

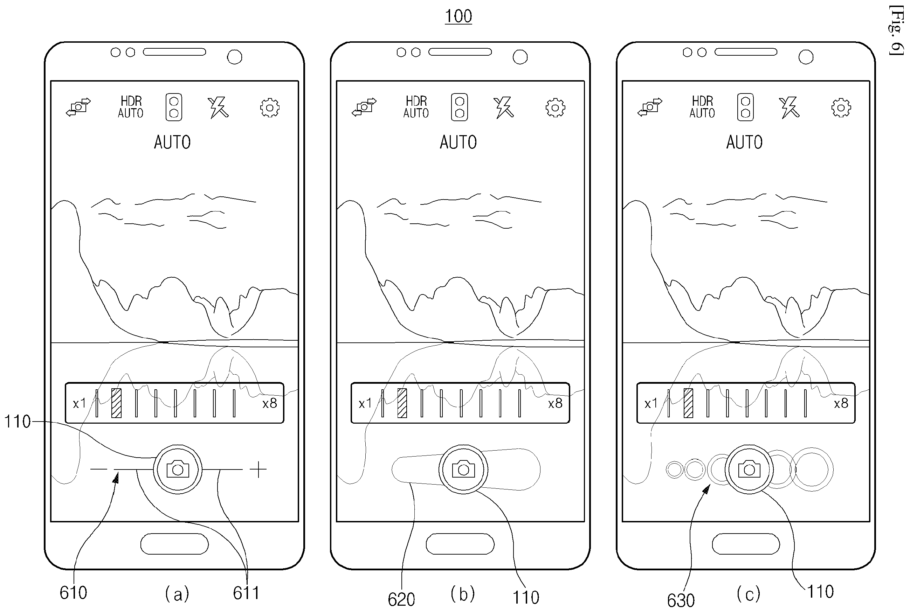

FIG. 6 is an illustration of various forms of a second object displayed on an electronic device according to an embodiment.

The electronic device 100 may enable a preset function in response to movement of the first icon 110 by a predetermined distance in the first direction based on a user input.

The electronic device 100 may display a second object corresponding to the preset function at the same time as, or subsequent to, enabling the preset function. For example, the second object corresponding to the preset function may guide a direction in which the electronic device 100 raises or lowers the intensity at which the preset function is applied.

Referring to panel (a) of FIG. 6, the electronic device 100 may display a second object 610 in such a manner that the second object 610 is adjacent to, or overlaps, the first icon 110. The second object 610 may include, for example, a straight line 611 overlapping the first icon 110 and guiding a moving direction of the first icon 110. Furthermore, the second object 610 may include a plus (+) sign and a minus (-) sign located adjacent to opposite ends of the straight line 611.

For example, the electronic device 100 may adjust the intensity at which the preset function is applied, in response to a user's touch and drag input for moving the first icon 110 toward the plus (+) sign or the minus (-) sign.

Referring to panel (b) of FIG. 6, the electronic device 100 may display a second object 620 having a different form in such a manner that the second object 620 is adjacent to, or overlaps, the first icon 110. For example, the second object 620 having a different form may extend in the horizontal direction and may have opposite ends with different widths in the horizontal direction. The electronic device 100 may display the second object 620 in such a manner that the second object 620 overlaps the first icon 110.

For example, the electronic device 100 may raise the intensity at which the preset function is applied, in response to the user's touch and drag input for moving the first icon 110 toward the wider end of the second object 620. Furthermore, the electronic device 100 may lower the intensity at which the preset function is applied, in response to the user's touch and drag input for moving the first icon 110 toward the narrower end of the second object 620.

Referring to panel (c) of FIG. 6, the electronic device 100 may display a second object 630 having a different form in such a manner that the second object 630 is adjacent to, or overlaps, the first icon 110. For example, the second object 630 having a different form may include a plurality of circles with different diameters. The electronic device 100 may display the second object 630 in such a manner that the second object 630 overlaps the first icon 110.

For example, the electronic device 100 may raise the intensity at which the preset function is applied, in response to the user's touch and drag input for moving the first icon 110 toward the largest circle of the second object 630. Furthermore, the electronic device 100 may lower the intensity at which the preset function is applied, in response to the user's touch and drag input for moving the first icon 110 toward the smallest circle of the second object 630.

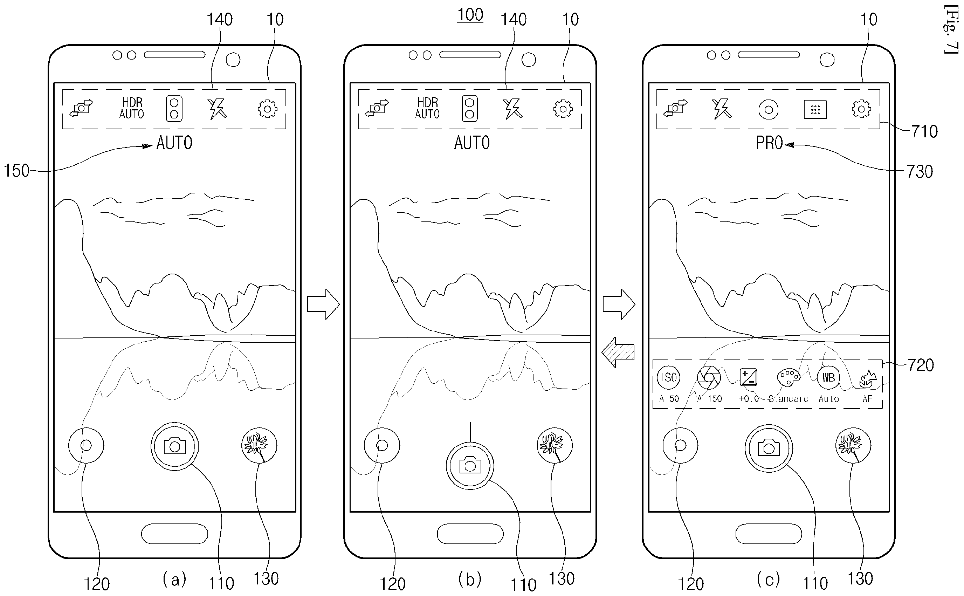

FIG. 7 is an illustration of an electronic device executing a preset function in response to movement of a first icon in a second direction, according to an embodiment.

Referring to panel (a) of FIG. 7, the electronic device 100 may display, on a display 10, a user interface for capturing an image.

The image capture user interface may include, for example, the first icon 110, the second icon 120, and/or the third icon 130. The first icon 110 may be, for example, an icon for capturing a still image. The second icon 120 may be an icon for recording a video, and the third icon 130 may be an icon for confirming captured images.

The image capture user interface may include, for example, the icons 140 that correspond to modifiable photographic elements in the current photographing mode. The icons 140 corresponding to the modifiable photographic elements in the current photographing mode may include, for example, an icon for switching between front and rear cameras, an icon for enabling an HDR, an icon for enabling a flash, an icon for settings, and the like.

Furthermore, the image capture user interface may include the icon or text 150 for explaining the currently-set photographing mode.

When an image capture function is enabled, the electronic device 100 may activate the camera module, may convert light incident through the camera module into an image signal, may perform image processing on the image signal, may convert the image signal into a displayable image, and may display the image on the display 10.

Referring to panel (b) of FIG. 7, the electronic device 100 changes an image capture mode in response to movement of the first icon 110 in the second direction based on a user input. That is, the electronic device 100 changes a first image capture mode to a second image capture mode different from the first image capture mode, in response to the movement of the first icon 110 in the second direction. The second direction may be a direction different from the first direction described above with reference to FIGs. 1A and 1B and may be inclined at an angle of about 90 degrees with respect to the first direction.

The first image capture mode and the second image capture mode may include, for example, a photographing mode in which the electronic device 100 decides values of photographic elements, a photographing mode in which a user adjusts the photographic elements (e.g., an F-number, sensitivity, a shutter speed, and the like), a self-photography mode in which the user takes an image of his/her face, a panorama photographing mode in which a single image is created by combining a plurality of images, or the like.

Referring to panel (c) of FIG. 7, the electronic device 100 may change from a photographing mode in which the electronic device 100 decides values of photographic elements to a photographing mode in which the user directly adjusts the photographic elements, in response to movement of the first icon 110 in the second direction based on a user input.

Simultaneously or subsequently, the electronic device 100 may change the icons 140 corresponding to modifiable photographic elements in the current photographing mode to icons 710 corresponding to modifiable photographic elements in the changed photographing mode. Furthermore, the electronic device 100 may display, on the display 10, objects 720 necessary for the photographing mode in which the user directly adjusts the photographic elements. Moreover, the electronic device 100 may display, on the display 10, text 730 representing the current photographing mode.

According to an embodiment, a photographing mode changed based on a user input for moving the first icon 110 in the second direction may be set in advance in the electronic device 100 or may be set in advance by the user. For example, the user may set various photographing modes, such as a panorama photographing mode, a self-photography mode, or a custom photographing mode configured with photographic elements set by the user, to be modified in response to a user input for moving the first icon 110 in the second direction.

The electronic device 100 may return to the previous photographing mode in response to movement of the first icon 110 in the second direction once more after the photographing mode is changed.

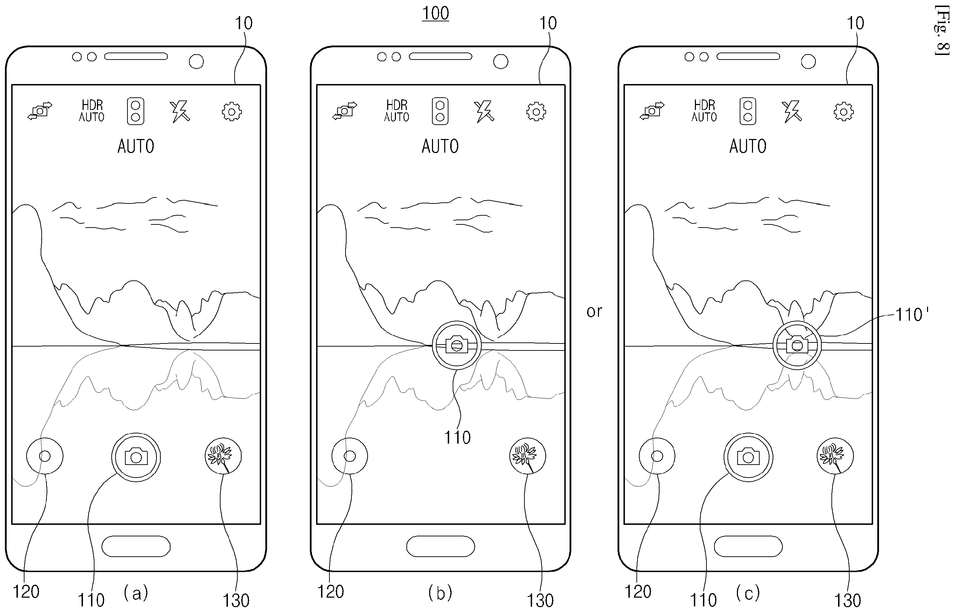

FIG. 8 is an illustration of an electronic device executing a preset function in response to movement of a first icon in a third direction, according to an embodiment.

Referring to panel (a) of FIG. 8, the electronic device 100 may display, on a display 10, a user interface for capturing an image.

The image capture user interface may include, for example, the first icon 110, the second icon 120, and/or the third icon 130. The first icon 110 may be, for example, an icon for capturing a still image. The second icon 120 may be an icon for recording a video, and the third icon 130 may be an icon for confirming captured images.

Referring to panel (b) of FIG. 8, the electronic device 100 may shift the first icon 110 in response to movement of the first icon 110 in the third direction based on a user input. The third direction may be a direction that is different from the first direction described above with reference to FIGs. 1A and 1B and the second direction described above with reference to FIG. 7, and may be inclined at an angle of about 45 degrees with respect to the first or second direction.

Accordingly, when taking an image by using the electronic device 100, the user may shift the first icon 110 to a position where the electronic device 100 is easy to hold. As a result, the user may take an image with various compositions and less shake.

Referring to panel (c) of FIG. 8, the electronic device 100 may additionally create an icon 110 performing the same function as the first icon 110 and may display the icon 110 on the display 10 in response to the movement of the first icon 110 in the third direction based on the user input.

Accordingly, the user may easily take an image by using the first icon 110 and the duplicate icon 110 in various photographing positions, such as taking an image by arranging the electronic device 100 in the landscape orientation or taking an image by arranging the electronic device 100 in the portrait orientation.

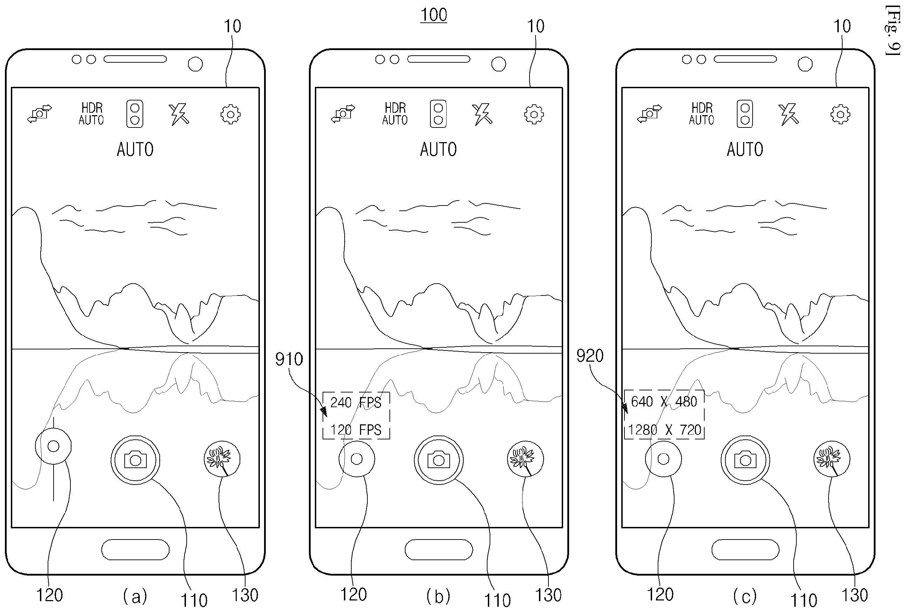

FIG. 9 is an illustration of an electronic device executing a preset function in response to movement of a second icon, according to an embodiment.

Referring to panel (a) of FIG. 9, the electronic device 100 may display, on a display 10, a user interface for capturing an image.

The image capture user interface may include, for example, the first icon 110, the second icon 120, and/or the third icon 130. The first icon 110 may be, for example, an icon for capturing a still image. The second icon 120 may be an icon for recording a video, and the third icon 130 may be an icon for confirming captured images.

In response to movement of an icon in a predetermined direction, the electronic device 100 may execute a function relating to the function of the corresponding icon.

Referring to panel (b) of FIG. 9, the electronic device 100 may display a video recording frame rate 910 that the electronic device 100 is capable of supporting, in response to movement of the second icon 120 in a predetermined direction based on a user input.

In this case, the user may select a desired video recording frame rate. The electronic device 100 may record a video at the video recording frame rate selected by the user.

Referring to panel (c) of FIG. 9, the electronic device 100 may display a video resolution 920 that the electronic device 100 is capable of supporting, in response to movement of the second icon 120 in a predetermined direction based on a user input.

In this case, the user may select a desired video resolution. The electronic device 100 may record a video at the video resolution selected by the user.

However, the present disclosure is not limited thereto. That is, the electronic device 100 may set various functions relating to video recording to be directly displayed on the display 10, in response to movement of the second icon 120 for video recording in a predetermined direction. Accordingly, the user may easily access a frequently-changed photographic element or a frequently-used function.

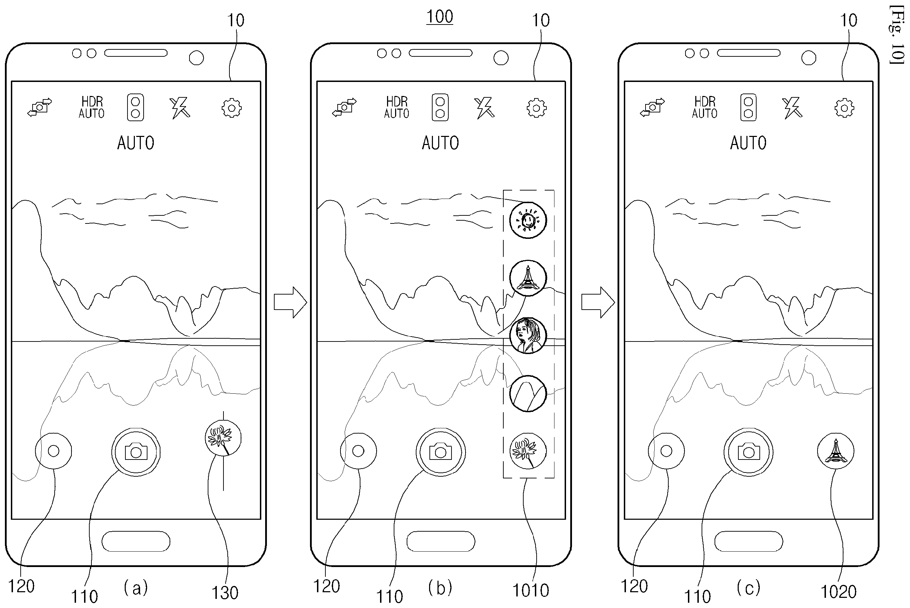

FIG. 10 is an illustration of an electronic device executing a preset function in response to movement of a third icon, according to an embodiment.

Referring to panel (a) of FIG. 10, the electronic device 100 may display, on a display 10, a user interface for capturing an image.

The image capture user interface may include, for example, the first icon 110, the second icon 120, and/or the third icon 130. The first icon 110 may be, for example, an icon for capturing a still image. The second icon 120 may be an icon for recording a video, and the third icon 130 may be an icon for confirming captured images.

In response to movement of an icon in a predetermined direction, the electronic device 100 according to an embodiment may execute a function relating to the function of the corresponding icon.

Referring to panel (b) of FIG. 10, the electronic device 100 may display, on the display 10, one or more folders 1010 included in a gallery application capable of reproducing captured images, in response to movement of the third icon 130 in a predetermined direction based on a user input.

Referring to panel (c) of FIG. 10, the electronic device 100 may change a folder in which captured images are stored to a user-selected folder in response to a user input for selecting one of the displayed folders 1010.

The electronic device 100 may display an icon 1020 representing the user-selected folder, instead of the third icon 130. In this state, the electronic device 100 may store a captured still image or a recorded video in the folder selected by the user.

However, the present disclosure is not limited thereto. That is, the electronic device 100 may set various functions relating to reproduction of an image to be directly displayed on the display 10, in response to movement of the third icon 130, which is capable of reproducing captured images, in a predetermined direction.

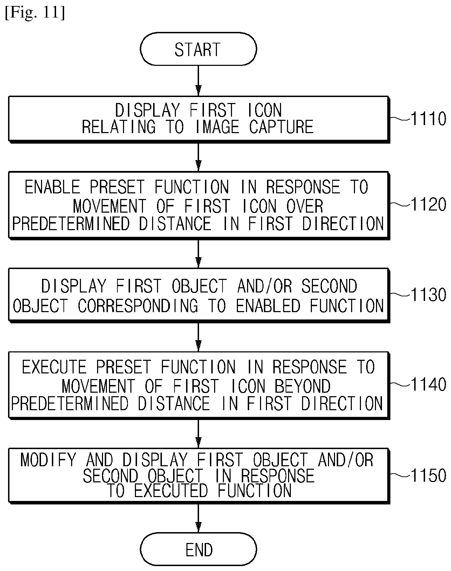

FIG. 11 is a flowchart of a method of an electronic device enabling and executing a preset function in response to a change in a position of an icon, according to an embodiment.

Referring to FIG. 11, in step 1110, the electronic device may display a first icon relating to image capture. The first icon may be, for example, an icon for capturing a still image.

In step 1120, the electronic device 100 may perform a preset function in response to movement of the first icon by a predetermined distance in a first direction. The preset function may include at least one of, for example, a zoom function, an exposure compensation function, a self-photographing time setting function, a sensitivity adjustment function, an F-number adjustment function, and a shutter speed adjustment function.

In step 1130, the electronic device 100 may display a first object and/or a second object that corresponds to the enabled function. For example, in the case where a zoom function is executed, the electronic device 100 may display the first object on which all zoom levels and the current zoom level selected by the electronic device 100 are displayed. The second object may display, for example, a direction in which a zoom level is increased or decreased. The direction in which the zoom level is increased or decreased may be the same as the first direction described above.

In step 1140, the electronic device 100 may execute the above-described preset function in response to movement of the first icon beyond the predetermined distance in the first direction. For example, the electronic device 100 may magnify or reduce a displayed image in response to additional movement of the first icon in the first direction.

In step 1150, the electronic device 100 may modify and display the first object and/or the second object that corresponds to the executed function. For example, the electronic device 100 may display a change of a zoom level by moving the zoom level included in the first object and selected by the electronic device, in response to the movement of the first icon.

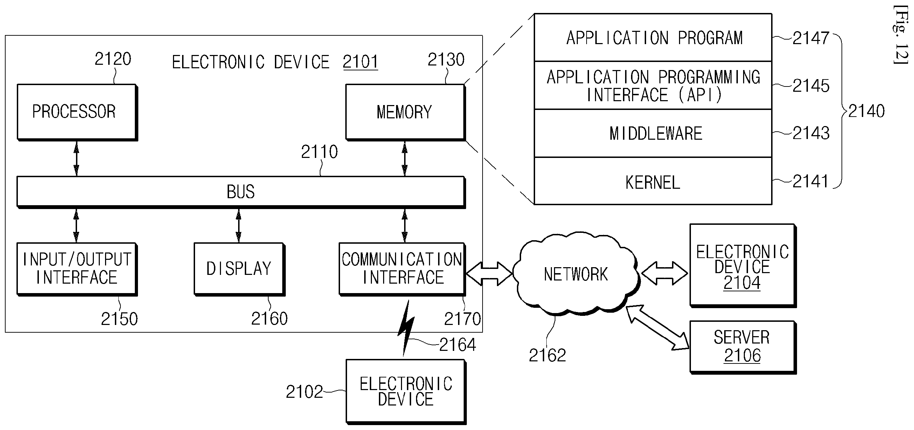

FIG. 12 is a block diagram of an electronic device 2101 in a network environment, according to an embodiment.

Referring to FIG. 12, the electronic device 2101 may include the electronic device 100 of FIGs. 1A and 1B. The electronic device 2101 may include a bus 2110, a processor 2120, a memory 2130, an input/output interface 2150, a display 2160, and a communication interface 2170. The electronic device 2101 may omit at least one of the above-described elements or may further include other element(s). The bus 2110 may interconnect the above-described elements 2110 to 2170 and may include a circuit for conveying communications (e.g., a control message and/or data) among the above-described elements. The processor 2120 may include one or more of a CPU, an AP, or a communication processor (CP). For example, the processor 2120 may perform an arithmetic operation or data processing associated with control and/or communication of at least other elements of the electronic device 2101.

The memory 2130 may include a volatile memory and/or a nonvolatile memory. For example, the memory 2130 may store instructions or data associated with at least one other element(s) of the electronic device 2101. The memory 2130 may store software and/or a program 2140. The program 2140 may include, for example, a kernel 2141, a middleware 2143, an application programming interface (API) 2145, and/or an application program (or an application) 2147. At least a part of the kernel 2141, the middleware 2143, or the API 2145 may be referred to as an operating system (OS). For example, the kernel 2141 may control or manage system resources (e.g., the bus 2110, the processor 2120, the memory 2130, and the like) that are used to execute operations or functions of other programs (e.g., the middleware 2143, the API 2145, and the application program 2147). Furthermore, the kernel 2141 may provide an interface that allows the middleware 2143, the API 2145, or the application program 2147 to access discrete elements of the electronic device 2101 so as to control or manage system resources.

The middleware 2143 may perform, for example, a mediation role such that the API 2145 or the application program 2147 communicates with the kernel 2141 to exchange data. Furthermore, the middleware 2143 may process one or more task requests received from the application program 2147 according to a priority. For example, the middleware 2143 may assign a priority, which makes it possible to use a system resource (e.g., the bus 2110, the processor 2120, the memory 2130, or the like) of the electronic device 2101, to at least one application of the application program 2147 and may process the one or more task requests. The API 2145 may be an interface through which the application program 2147 controls a function provided by the kernel 2141 or the middleware 2143, and may include, for example, at least one interface or function (e.g., an instruction) for a file control, a window control, image processing, a character control, or the like. The input/output interface 2150 may transmit an instruction or data input from a user or another external device, to other element(s) of the electronic device 2101 or may output an instruction or data, received from other element(s) of the electronic device 2101, to a user or another external device.

The display 2160 may include, for example, an LCD, an LED display, an OLED display, a MEMS display, or an electronic paper display. The display 2160 may display, for example, various contents (e.g., a text, an image, a video, an icon, a symbol, and the like) to a user. The display 2160 may include a touch screen and may receive, for example, a touch, gesture, proximity, or hovering input using an electronic pen or a part of a user's body. For example, the communication interface 2170 may establish communication between the electronic device 2101 and an external device (e.g., the first electronic device 2102, the second electronic device 2104, or the server 2106). For example, the communication interface 2170 may be connected to the network 2162 over wireless communication or wired communication to communicate with the second electronic device 2104 or the server 2106.

For example, the wireless communication may include cellular communication using at least one of long-term evolution (LTE), LTE advanced (LTE-A), code division multiple access (CDMA), wideband CDMA (WCDMA), universal mobile telecommunications system (UMTS), wireless broadband (WiBro), global systems for mobile communications (GSM), or the like. The wireless communication may include at least one of wireless fidelity (Wi-Fi), Bluetooth, Bluetooth low energy (BLE), Zigbee, near field communication (NFC), magnetic stripe transmission (MST), radio frequency (RF), a body area network, or the like. According to an embodiment, the wireless communication may include GNSS. The GNSS may be one of, for example, a global positioning system (GPS), a global navigation satellite system (Glonass), a Beidou navigation satellite system (Beidou), or an European global satellite-based navigation system (Galileo). Hereinafter, in the present disclosure, "GPS" and "GNSS" may be used interchangeably. Wired communication may include at least one of, for example, a universal serial bus (USB), a high definition multimedia interface (HDMI), a recommended standard-232 (RS-232), power line communication, a plain old telephone service (POTS), or the like. The network 2162 may include at least one of telecommunications networks, for example, a computer network (e.g., a local area network (LAN) or wide area network (WAN)), an Internet, or a telephone network.

Each of the first and second external electronic devices 2102 and 2104 may be a device of which the type is different from or the same as that of the electronic device 2101. According to an embodiment, all or a portion of operations that the electronic device 2101 will perform may be executed by the first electronic device 2102, the second electronic device 2104 or the server 2106. In a case where the electronic device 2101 executes any function or service automatically or in response to a request, the electronic device 2101 may not perform the function or the service internally, but, alternatively additionally, it may request at least a portion of a function associated with the electronic device 2101 at other electronic device (e.g., the electronic device 2102 or 2104 or the server 2106). The other electronic device (e.g., the electronic device 2102 or 2104 or the server 2106) may execute the requested function or additional function and may transmit the execution result to the electronic device 2101. The electronic device 2101 may provide the requested function or service using the received result or may additionally process the received result to provide the requested function or service. To this end, for example, cloud computing, distributed computing, or client-server computing may be used.

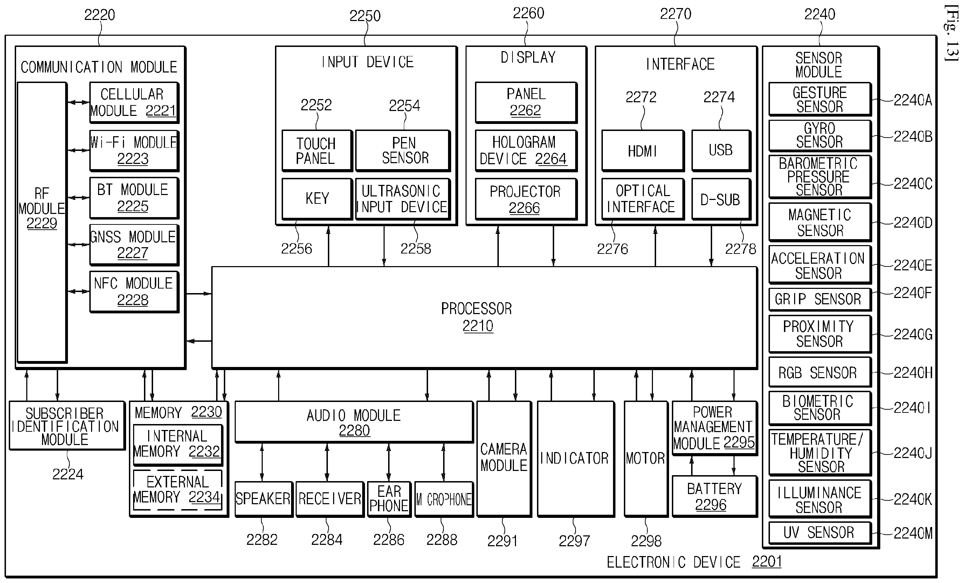

FIG. 13 is a block diagram of an electronic device 2201, according to an embodiment.

Referring to FIG. 13, the electronic device 2201 may include, for example, all or a part of the electronic device 2101 illustrated in FIG. 12. The electronic device 2201 may include one or more processors (e.g., an AP) 2210, a communication module 2220, a subscriber identification module 2224, a memory 2230, a sensor module 2240, an input device 2250, a display 2260, an interface 2270, an audio module 2280, a camera module 2291, a power management module 2295, a battery 2296, an indicator 2297, and a motor 2298. For example, the processor 2210 may be implemented with a system on chip (SoC). According to an embodiment, the processor 2210 may further include a graphics processing unit (GPU) and/or an image signal processor. The processor 2210 may include at least a part (e.g., a cellular module 2221) of elements illustrated in FIG. 13. The processor 2210 may load a command or data, which is received from at least one of other elements (e.g., a nonvolatile memory), into a volatile memory and process the loaded instruction or data. The processor 2210 may store result data in the nonvolatile memory.

The communication module 2220 may be configured the same as or similar to the communication interface 2170 of FIG. 12. The communication module 2220 may include the cellular module 2221, a Wi-Fi module 2223, a BT module 2225, a GNSS module 2227, an NFC module 2228, and an RF module 2229. The cellular module 2221 may provide, for example, voice communication, video communication, a character service, an Internet service, or the like over a communication network. The cellular module 2221 may perform discrimination and authentication of the electronic device 2201 within a communication network by using the subscriber identification module (e.g., a SIM card) 2224. The cellular module 2221 may perform at least a portion of functions that the processor 2210 provides. The cellular module 2221 may include a CP. At least a part (e.g., two or more) of the cellular module 2221, the Wi-Fi module 2223, the BT module 2225, the GNSS module 2227, or the NFC module 2228 may be included within one integrated circuit (IC) or an IC package. For example, the RF module 2229 may transmit and receive a communication signal (e.g., an RF signal). For example, the RF module 2229 may include a transceiver, a power amplifier module (PAM), a frequency filter, a low noise amplifier (LNA), an antenna, and the like. At least one of the cellular module 2221, the Wi-Fi module 2223, the BT module 2225, the GNSS module 2227, or the NFC module 2228 may transmit and receive an RF signal through a separate RF module. The subscriber identification module 2224 may include, for example, a card and/or embedded SIM that includes a subscriber identification module and may include unique identify information (e.g., integrated circuit card identifier (ICCID)) or subscriber information (e.g., international mobile subscriber identity (IMSI)).

The memory 2230 (e.g., the memory 2130) may include an internal memory 2232 or an external memory 2234. For example, the internal memory 2232 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory, a hard drive, or a solid state drive (SSD).The external memory 2234 may include a flash drive such as compact flash (CF) drive, secure digital (SD) memory card, micro secure digital (Micro-SD) memory card, mini secure digital (Mini-SD) memory card, extreme digital (xD) memory card, a multimedia card (MMC), a memory stick, and the like. The external memory 2234 may be operatively and/or physically connected to the electronic device 2201 through various interfaces.

The sensor module 2240 may measure, for example, a physical quantity or may detect an operational state of the electronic device 2201. The sensor module 2240 may convert the measured or detected information to an electrical signal. For example, the sensor module 2240 may include at least one of a gesture sensor 2240A, a gyro sensor 2240B, a barometric pressure sensor 2240C, a magnetic sensor 2240D, an acceleration sensor 2240E, a grip sensor 2240F, the proximity sensor 2240G, a color sensor 2240H (e.g., a red, green, blue (RGB) sensor), a biometric sensor 2240I, a temperature/humidity sensor 2240J, an illuminance sensor 2240K, or an ultraviolet (UV) light sensor 2240M. Additionally or generally, the sensor module 2240 may further include, for example, an electronic-nose (E-nose) sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 2240 may further include a control circuit for controlling at least one or more sensors included therein. According to an embodiment, the electronic device 2201 may further include a processor that is a part of the processor 2210 or independent of the processor 2210 and is configured to control the sensor module 2240. The processor may control the sensor module 2240 while the processor 2210 remains in a reduced power or sleep state.

The input device 2250 may include, for example, a touch panel 2252, a (digital) pen sensor 2254, a key 2256, or an ultrasonic input unit 2258. For example, the touch panel 2252 may use at least one of capacitive, resistive, infrared and ultrasonic detection methods. In addition, the touch panel 2252 may further include a control circuit. The touch panel 2252 may further include a tactile layer to provide a tactile reaction to a user. The (digital) pen sensor 2254 may be, for example, a part of a touch panel or may include an additional sheet for recognition. The key 2256 may include, for example, a physical button, an optical key, or a keypad. The ultrasonic input device 2258 may detect (or sense) an ultrasonic signal, which is generated from an input device, through a microphone (e.g., a microphone 2288) and may check data corresponding to the detected ultrasonic signal.

The display 2260 (e.g., the display 2160) may include a panel 2262, a hologram device 2264, a projector 2266, and/or a control circuit for controlling the panel 2262, the hologram device 2264, or the projector 2266. The panel 2262 may be implemented, for example, to be flexible, transparent or wearable. The panel 2262 and the touch panel 2252 may be integrated into a single module. According to an embodiment, the panel 2262 may include a pressure sensor (or force sensor) that measures the intensity of touch pressure by a user. The pressure sensor may be implemented integrally with the touch panel 2252, or may be implemented as at least one sensor separately from the touch panel 2252. The hologram device 2264 may display a stereoscopic image in a space using a light interference phenomenon. The projector 2266 may project light onto a screen so as to display an image. For example, the screen may be arranged in the inside or the outside of the electronic device 2201. The interface 2270 may include, for example, an HDMI 2272, a USB 2274, an optical interface 2276, or a D-subminiature (D-sub) connector 2278. The interface 2270 may be included, for example, in the communication interface 2170 illustrated in FIG. 12. Additionally or generally, the interface 2270 may include, for example, a mobile high definition link (MHL) interface, an SD card/ MMC interface, or an Infrared Data Association (IrDA) standard interface.

The audio module 2280 may convert a sound and an electrical signal in dual directions. At least a part of the audio module 2280 may be included, for example, in the input/output interface 2150 illustrated in FIG. 12. The audio module 2280 may process, for example, sound information that is input or output through a speaker 2282, a receiver 2284, an earphone 2286, or the microphone 2288. For example, the camera module 2291 may record a still image or a video. The camera module 2291 may include at least one or more image sensors (e.g., a front sensor or a rear sensor), a lens, an image signal processor (ISP), or a flash (e.g., an LED or a xenon lamp). The power management module 2295 may manage, for example, power of the electronic device 2201. A power management integrated circuit (PMIC), a charger IC, or a battery gauge may be included in the power management module 2295. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, a rectifier, or the like. The battery gauge may measure, for example, a remaining capacity of the battery 2296 and a voltage, current or temperature thereof while the battery is charging. The battery 2296 may include, for example, a rechargeable battery and/or a solar battery.

The indicator 2297 may display a certain state of the electronic device 2201 or a part thereof (e.g., the processor 2210), such as a booting state, a message state, a charging state, and the like. The motor 2298 may convert an electrical signal into a mechanical vibration and may generate the following effects: a vibration, a haptic effect, and the like. The electronic device 2201 may include a processing device (e.g., a GPU) for supporting a mobile TV. The processing device for supporting the mobile TV may process media data according to the standards of digital multimedia broadcasting (DMB), digital video broadcasting (DVB), MediaFLO^{™}, and the like. Each of the above-mentioned elements of the electronic device 2201 according to various embodiments of the present disclosure may be configured with one or more components, and the names of the elements may be changed according to the type of the electronic device 2201. Some elements of the electronic device (e.g., the electronic device 2201) may be omitted or other additional elements may be added. Furthermore, some of the elements of the electronic device 2201 may be combined with each other so as to form one entity, so that the functions of the elements may be performed in the same manner as before the combination.

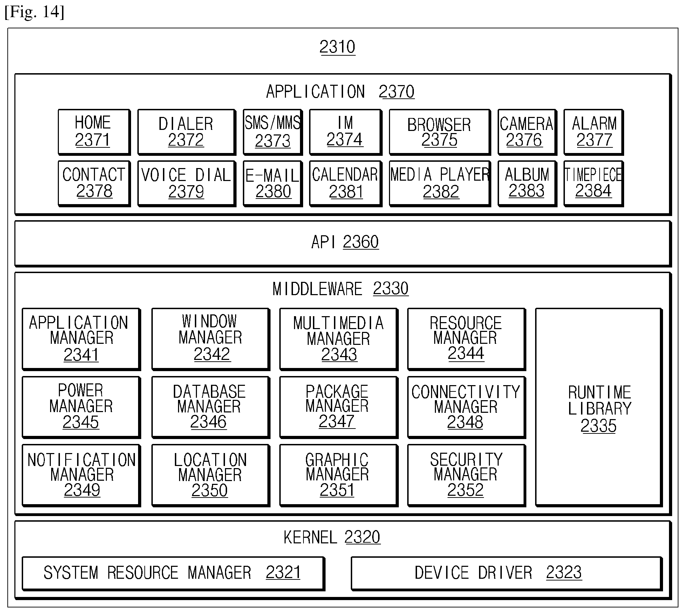

FIG. 14 is a block diagram of a program module 2310, according to an embodiment.

Referring to FIG. 14, the program module 2310 (e.g., the program 2140) may include an OS to control resources associated with an electronic device (e.g., the electronic device 2101), and/or diverse applications (e.g., the application program 2147) driven on the OS. The OS may be, for example, Android^{®}, iOS^{®}, Windows^{®}, Symbian^{®}, Tizen^{®}, or Bada^{™}.

The program module 2310 may include a kernel 2320 (e.g., the kernel 2141), a middleware 2330 (e.g., the middleware 2143), an application programming interface (API) 2360 (e.g., the API 2145), and/or an application 2370 (e.g., the application program 2147). At least a portion of the program module 2310 may be preloaded on an electronic device or may be downloadable from the first electronic device 2102, the second electronic device 2104, the server 2106, or the like).

The kernel 2320 (e.g., the kernel 2141) may include, for example, a system resource manager 2321 or a device driver 2323. The system resource manager 2321 may control, allocate, or retrieve system resources. According to an embodiment, the system resource manager 2321 may include a process managing unit, a memory managing unit, a file system managing unit, or the like. The device driver 2323 may include, for example, a display driver, a camera driver, a Bluetooth driver, a shared memory driver, a USB driver, a keypad driver, a Wi-Fi driver, an audio driver, or an inter-process communication (IPC) driver. The middleware 2330 may provide, for example, a function that the application 2370 needs in common, or may provide diverse functions to the application 2370 through the API 2360 to allow the application 2370 to efficiently use limited system resources of the electronic device. According to an embodiment, the middleware 2330 may include at least one of a runtime library 2335, an application manager 2341, a window manager 2342, a multimedia manager 2343, a resource manager 2344, a power manager 2345, a database manager 2346, a package manager 2347, a connectivity manager 2348, a notification manager 2349, a location manager 2350, a graphic manager 2351, or a security manager 2352.

The runtime library 2335 may include, for example, a library module that is used by a compiler to add a new function through a programming language while the application 2370 is being executed. The runtime library 2335 may perform input/output management, memory management, or capacities about arithmetic functions. The application manager 2341 may manage, for example, a life cycle of at least one application of the application 2370. The window manager 2342 may manage a graphical user interface (GUI) resource that is used in a screen. The multimedia manager 2343 may identify a format necessary for playing diverse media files, and may perform encoding or decoding of media files by using a codec suitable for the format. The resource manager 2344 may manage resources such as a memory space or source code of the application 2370. The power manager 2345 may manage a battery or power, and may provide power information for an operation of an electronic device. According to an embodiment, the power manager 2345 may operate with a basic input/output system (BIOS). The database manager 2346 may generate, search for, or modify database that is to be used in the application 2370. The package manager 2347 may install or update an application that is distributed in the form of package file.

The connectivity manager 2348 may manage, for example, wireless connection. The notification manager 2349 may provide an event, for example, arrival message, appointment, or proximity notification to a user. For example, the location manager 2350 may manage location information about an electronic device. The graphic manager 2351 may manage a graphic effect that is provided to a user, or manage a user interface relevant thereto. The security manager 2352 may provide, for example, system security or user authentication. According to an embodiment, the middleware 2330 may include a telephony manager for managing a voice or video call function of the electronic device or a middleware module that combines diverse functions of the above-described elements. The middleware 2330 may provide a module specialized to each OS kind to provide differentiated functions. Additionally, the middleware 2330 may dynamically remove a part of the preexisting elements or may add new elements thereto. The API 2360 may be, for example, a set of programming functions and may be provided with a configuration that is variable depending on an OS. For example, in the case where an OS is Android^{®} or the iOS, it may provide one API set per platform. In the case where an OS is Tizen^{®}, it may provide two or more API sets per platform.

The application 2370 may include, for example, applications such as a home application 2371, a dialer application 2372, an SMS/MMS application 2373, an instant messaging application (IM) 2374, a browser application 2375, a camera application 2376, an alarm application 2377, a contact application 2378, a voice dial application 2379, an e-mail application 2380, a calendar application 2381, a media player application 2382, an album application 2383, a timepiece application 2384, health care application (e.g., measuring an exercise quantity, blood sugar, or the like) or offering of environmental information (e.g., information of barometric pressure, humidity, temperature, or the like). The application 2370 may include an information exchanging application to support information exchange between an electronic device and an external electronic device. The information exchanging application may include, for example, a notification relay application for transmitting specific information to an external electronic device, or a device management application for managing the external electronic device. For example, the notification relay application may include a function of transmitting notification information, which arise from other applications, to an external electronic device or may receive, for example, notification information from an external electronic device and provide the notification information to a user. The device management application may install, delete, or update for example, a function (e.g., turn-on/turn-off of an external electronic device itself (or a part of components) or adjustment of brightness (or resolution) of a display) of the external electronic device which communicates with the electronic device, and an application running in the external electronic device. The application 2370 may include an application (e.g., a health care application of a mobile medical device) that is assigned in accordance with an attribute of an external electronic device. The application 2370 may include an application that is received from an external electronic device. At least a portion of the program module 2310 may be implemented by software, firmware, hardware (e.g., the processor 2210), or a combination (e.g., execution) of two or more thereof, and may include modules, programs, routines, sets of instructions, processes, or the like for performing one or more functions.

The term "module" used in the present disclosure may indicate a unit composed of hardware, software and firmware and may be interchangeably used with the terms "unit", "logic", "logical block", "component" and "circuit". The term "module" may indicate an integrated component or may indicate a minimum unit for performing one or more functions or a part thereof. The term "module" may indicate a device implemented mechanically or electronically and may include at least one of an application-specific IC (ASIC), a field-programmable gate array (FPGA), and a programmable-logic device for performing some operations, which are known or will be developed. At least a part of an apparatus (e.g., modules or functions thereof) or a method (e.g., operations) according to an embodiment may be, for example, implemented by instructions stored in non-transitory computer-readable storage media (e.g., the memory 2130) in the form of a program module. The instruction, when executed by a processor (e.g., the processor 2120), may cause the processor to perform a function corresponding to the instruction. A non-transitory computer-readable recording medium may include a hard disk, a floppy disk, a magnetic media (e.g., a magnetic tape), an optical media (e.g., a compact disc read only memory (CD-ROM) and a DVD, a magneto-optical media (e.g., a floptical disk)), and an internal memory. In addition, the one or more instructions may contain a code made by a compiler or a code executable by an interpreter. A module or a program module according to an embodiment may include at least one of the above elements, or a part of the above elements may be omitted, or other elements may be further included. Operations performed by a module, a program module, or other elements according to an embodiment may be executed sequentially, in parallel, repeatedly, or in a heuristic method or some operations may be executed in different sequences or may be omitted. Alternatively, other operations may be added.

## Claims

1. An electronic device (100), comprising:
a camera module (2291);
a display (210) including a touch screen that is configured to receive a touch input;
at least one processor (230); and
a memory (220) configured to store instructions that, when executed by the electronic device (100), cause the at least one processor (230) to:
control (1110) the display (210) to display an image obtained through the camera module (2291), a first icon (110) relating to a function of capturing the image obtained through the camera module (2291), a second icon (120) for recording a video, and a third icon (130) for confirming captured images;
whereby the memory (220) is configured to store instructions that, when executed by the electronic device (100), cause the at least one processor (230) to:
when receiving a touch input for moving the first icon (110) by a predetermined distance in a first direction:
activate (1120) a zoom function and control the display to display (1130) a first object (160) representing a level of the zoom function that is applied to the image and a second object (170) representing a direction for raising or lowering the level, without displaying the second icon (120) and the third icon (130);
execute (1140) the zoom function, control the display (210) to modify and display (1150) the first object (160), and magnify or reduce the image obtained through the camera module (2291), in response to identifying that the first icon (110) moves according to the touch input beyond the predetermined distance in the first direction; and
capture the image when the touch input on the first icon (110) moving according to a user's touch and drag input ends,
when receiving another touch input for moving the first icon (110) in a second direction that is different from the first direction:
change a first image capture mode to a second image capture mode; and
display objects (720) for adjusting photographic elements of the second image capture mode.

2. The electronic device of claim 1,
wherein the memory (220) is further configured to store instructions that, when executed by the electronic device (100), cause the at least one processor (230) to return the first icon (110) to an initial position before movement when the touch input on the first icon (110) moving according to a user's touch and drag input ends.

3. The electronic device of claim 1,
wherein the memory (220) is further configured to store instructions that, when executed by the electronic device (100), cause the at least one processor (230) to end the displaying of the first object (160) when the touch input on the first icon (110) moving according to a user's touch and drag input ends.

4. The electronic device of claim 1, wherein the second object (170) is divided into a first section (171) and a second section (172),
wherein the first section (171) ranges from the point where the minus sign is displayed to the point where the first icon (110) is located first, and the second section (172) ranges from the point where the plus sign is displayed to the point where the first icon (110) is located first,
wherein the memory (220) is further configured to store instructions that, when executed by the electronic device (100), cause the at least one processor (230) to
when the first icon (110) is located in the second section (172) at the start time of displaying the second object (170):
increase the level of the zoom function when the first icon (110) moves in the second section (172) toward the point where the plus sign is displayed,
maintain the level of the zoom function when the first icon (110) moves in the second section (172) toward the first section (171), and
decrease the level of the zoom function when the first icon (110) enters the first section (171).

5. The electronic device of claim 1, wherein the memory (220) is further configured to store instructions that, when executed by the electronic device (100), cause the at least one processor (230) to change the second image capture mode to the first image capture mode in response to identifying that the first icon (110) moves according to another touch input in the second direction.

6. The electronic device of claim 1, wherein the memory (220) is further configured to store instructions that, when executed by the electronic device (100), cause the at least one processor (230) to:
control the display (210) to display at least one of an object (920) for selecting resolution of the video and an object (910) for selecting a frame rate of the video, in response to identifying that the second icon (120) moves according to another touch input by a predetermined distance.

7. The electronic device of claim 1, wherein the memory (220) is further configured to store instructions that, when executed by the electronic device (100), cause the at least one processor (230) to:
control the display (210) to display at least one folder (1010) in which a captured image is stored, in response to identifying that the third icon (130) moves according to the input by a predetermined distance.

8. The electronic device of claim 1, wherein the memory (220) is further configured to store instructions that, when executed by the electronic device (100), cause the at least one processor (230) to move the first icon (110) or to display an icon (110') performing a same function as the first icon (110) at a shifted position, in response to identifying that the first icon (110) moves according to the touch input in a third direction that is different from the first direction and a second direction.

9. A method for controlling an electronic device (100), the method comprising:
displaying (1110) an image obtained through a camera module (2291), a first icon (110) relating to a function of capturing an image, a second icon (120) for recording a video, and a third icon (130) for confirming captured images;
whereby comprising:
when receiving a touch input for moving the first icon (110) by a predetermined distance in a first direction:
activating (1120) a zoom function and displaying (1130) a first object (160) representing a level of the zoom function that is applied to the image and a second object (170) representing a direction for raising or lowering the level, without displaying the second icon (120) and the third icon (130);
executing (1140) the zoom function, modifying and displaying (1150) the first object (160), and magnifying or reducing the image obtained through the camera module (2291), in response to identifying that the first icon (110) moves according to an input beyond the predetermined distance in the first direction; and
capturing the image when the touch input on the first icon (110) moving according to a user's touch and drag input ends,
when receiving another touch input for moving the first icon (110) in a second direction that is different from the first direction:
changing a first image capture mode to a second image capture mode; and
displaying objects (720) for adjusting photographic elements of the second image capture mode.

10. The method of claim 9, further comprising:
in response to the first icon (110) moving according to a user's touch and drag input, returning the first icon (110) to an initial position before the movement when the touch input on the first icon (110) ends.

11. The method of claim 9, further comprising:
ending the displaying of the first object (160) when the touch input on the first icon (110) ends.

12. The method of claim 9, wherein the second object (170) is divided into a first section (171) and a second section (172),
wherein the first section (171) ranges from the point where the minus sign is displayed to the point where the first icon (110) is located first, and the second section (172) ranges from the point where the plus sign is displayed to the point where the first icon (110) is located first,
wherein the method further comprises:
when the first icon (110) is located in the second section (172) at the start time of displaying the second object (170):
increasing the level of the zoom function when the first icon (110) moves in the second section (172) toward the point where the plus sign is displayed,
maintaining the level of the zoom function when the first icon (110) moves in the second section (172) toward the first section (171), and
decreasing the level of the zoom function when the first icon (110) enters the first section (171).

## Patentansprüche

1. Elektronische Vorrichtung (100), die Folgendes umfasst:
ein Kameramodul (2291);
eine Anzeige (210), einschließlich eines Berührungsbildschirms, der ausgelegt ist, um eine Berührungseingabe zu empfangen;
mindestens einen Prozessor (230); und
einen Speicher (220), der ausgelegt ist, um Anweisungen zu speichern, die, wenn sie von der elektronischen Vorrichtung (100) ausgeführt werden, den mindestens einen Prozessor (230) zu Folgendem veranlassen:
Steuern (1110) der Anzeige (210) zum Anzeigen eines durch das Kameramodul (2291) erhaltenen Bildes, eines ersten Symbols (110), das sich auf eine Funktion zum Erfassen des durch das Kameramodul (2291) erhaltenen Bildes bezieht, eines zweiten Symbols (120) zum Aufzeichnen eines Videos, und eines dritten Symbols (130) zum Bestätigen von aufgenommenen Bildern;
wobei der Speicher (220) ausgelegt ist, um Anweisungen zu speichern, die, wenn sie von der elektronischen Vorrichtung (100) ausgeführt werden, den mindestens einen Prozessor (230) zu Folgendem veranlassen:
beim Empfangen einer Berührungseingabe zum Bewegen des ersten Symbols (110) um eine vorbestimmte Strecke in eine erste Richtung:
Aktivieren (1120) einer Zoomfunktion und Steuern der Anzeige, um ein erstes Objekt (160), das einen Pegel der auf das Bild angewendeten Zoomfunktion darstellt, und ein zweites Objekt (170), das eine Richtung zum Anheben oder Absenken des Pegels darstellt, anzuzeigen (1130), ohne das zweite Symbol (120) und das dritte Symbol (130) anzuzeigen;
Ausführen (1140) der Zoomfunktion, Steuern der Anzeige (210), um das erste Objekt (160) zu modifizieren und anzuzeigen (1150), und um das durch das Kameramodul (2291) erhaltene Bild zu vergrößern oder verkleinern, und zwar als Reaktion auf das Identifizieren, dass sich das erste Symbol (110) gemäß der Berührungseingabe über die vorbestimmte Strecke hinaus in der ersten Richtung bewegt; und
Aufnehmen des Bildes, wenn die Berührungseingabe auf dem ersten Symbol (110), das sich gemäß einer Berührungs- und Zieheingabe eines Benutzers bewegt, endet,
beim Empfangen einer weiteren Berührungseingabe zum Bewegen des ersten Symbols (110) in eine zweite Richtung, die sich von der ersten Richtung unterscheidet:
Ändern eines ersten Bildaufnahmemodus in einen zweiten Bildaufnahmemodus; und
Anzeigen von Objekten (720) zum Anpassen von fotografischen Elementen des zweiten Bildaufnahmemodus.

2. Elektronische Vorrichtung nach Anspruch 1,
wobei der Speicher (220) ferner ausgelegt ist, um Anweisungen zu speichern, die, wenn sie von der elektronischen Vorrichtung (100) ausgeführt werden, den mindestens einen Prozessor (230) veranlassen, das erste Symbol (110) in eine Ausgangsposition vor der Bewegung zurückzubringen, wenn die Berührungseingabe auf dem ersten Symbol (110), das sich gemäß der Berührungs- und Zieheingabe eines Benutzers bewegt, endet.

3. Elektronische Vorrichtung nach Anspruch 1,
wobei der Speicher (220) ferner ausgelegt ist, um Anweisungen zu speichern, die, wenn sie von der elektronischen Vorrichtung (100) ausgeführt werden, den mindestens einen Prozessor (230) veranlassen, die Anzeige des ersten Objekts (160) zu beenden, wenn die Berührungseingabe auf dem ersten Symbol (110), das sich gemäß der Berührungs- und Zieheingabe des Benutzers bewegt, endet.

4. Elektronische Vorrichtung nach Anspruch 1, wobei das zweite Objekt (170) in einen ersten Abschnitt (171) und einen zweiten Abschnitt (172) unterteilt ist,
wobei der erste Abschnitt (171) von dem Punkt, an dem das Minuszeichen angezeigt wird, bis zu dem Punkt reicht, an dem das erste Symbol (110) sich zuerst befindet, und der zweite Abschnitt (172) von dem Punkt, an dem das Pluszeichen angezeigt wird, bis zu dem Punkt reicht, an dem das erste Symbol (110) sich zuerst befindet,
wobei der Speicher (220) ferner ausgelegt ist, um Anweisungen zu speichern, die, wenn sie von der elektronischen Vorrichtung (100) ausgeführt werden, den mindestens einen Prozessor (230) zu Folgendem zu veranlassen, wenn sich das erste Symbol (110) zu der Startzeit der Anzeige des zweiten Objekts (170) in dem zweiten Abschnitt (172) befindet:
Erhöhen des Pegels der Zoomfunktion, wenn sich das erste Symbol (110) in dem zweiten Abschnitt (172) zu dem Punkt hin bewegt, an dem das Pluszeichen angezeigt wird,
Beibehalten des Pegels der Zoomfunktion, wenn sich das erste Symbol (110) in dem zweiten Abschnitt (172) in Richtung des ersten Abschnitts (171) bewegt, und
Verringern des Pegels der Zoomfunktion, wenn das erste Symbol (110) in den ersten Abschnitt (171) eintritt.

5. Elektronische Vorrichtung nach Anspruch 1, wobei der Speicher (220) ferner ausgelegt ist, um Anweisungen zu speichern, die, wenn sie von der elektronischen Vorrichtung (100) ausgeführt werden, den mindestens einen Prozessor (230) veranlassen, als Reaktion auf das Identifizieren, dass sich das erste Symbol (110) gemäß einer anderen Berührungseingabe in die zweite Richtung bewegt, den zweiten Bildaufnahmemodus in den ersten Bildaufnahmemodus zu ändern.

6. Elektronische Vorrichtung nach Anspruch 1, wobei der Speicher (220) ferner ausgelegt ist, um Anweisungen zu speichern, die, wenn sie von der elektronischen Vorrichtung (100) ausgeführt werden, den mindestens einen Prozessor (230) zu Folgendem veranlassen:
Steuern der Anzeige (210), um mindestens eines von einem Objekt (920) zum Auswählen der Auflösung des Videos und einem Objekt (910) zum Auswählen einer Bildrate des Videos anzuzeigen, als Reaktion auf das Identifizieren, dass sich das zweite Symbol (120) gemäß einer anderen Berührungseingabe um eine vorbestimmte Strecke bewegt.

7. Elektronische Vorrichtung nach Anspruch 1, wobei der Speicher (220) ferner ausgelegt ist, um Anweisungen zu speichern, die, wenn sie von der elektronischen Vorrichtung (100) ausgeführt werden, den mindestens einen Prozessor (230) zu Folgendem veranlassen:
Steuern der Anzeige (210), um mindestens einen Ordner (1010) anzuzeigen, in dem ein aufgenommenes Bild gespeichert ist, als Reaktion auf das Identifizieren, dass sich das dritte Symbol (130) gemäß der Eingabe um eine vorbestimmte Strecke bewegt.

8. Elektronische Vorrichtung nach Anspruch 1, wobei der Speicher (220) ferner ausgelegt ist, um Anweisungen zu speichern, die, wenn sie von der elektronischen Vorrichtung (100) ausgeführt werden, den mindestens einen Prozessor (230) veranlassen, das erste Symbol (110) zu bewegen oder ein Symbol (110'), das dieselbe Funktion wie das erste Symbol (110) durchführt, an einer verschobenen Position anzuzeigen, als Reaktion auf das Identifizieren, dass sich das erste Symbol (110) gemäß der Berührungseingabe in eine dritte Richtung bewegt, die sich von der ersten Richtung und einer zweiten Richtung unterscheidet.

9. Verfahren zur Steuerung einer elektronischen Vorrichtung (100), wobei das Verfahren Folgendes umfasst:
Anzeigen (1110) eines durch das Kameramodul (2291) erhaltenen Bildes, eines ersten Symbols (110), das sich auf eine Funktion zum Erfassen des durch das erhaltenen Bildes bezieht, eines zweiten Symbols (120) zum Aufzeichnen eines Videos, und eines dritten Symbols (130) zum Bestätigen von aufgenommenen Bildern;
ferner umfassend:
beim Empfangen einer Berührungseingabe zum Bewegen des ersten Symbols (110) um eine vorbestimmte Strecke in eine erste Richtung:
Aktivieren (1120) einer Zoomfunktion und Anzeigen (1130) eines ersten Objekts (160), das einen Pegel der auf das Bild angewendeten Zoomfunktion darstellt, und eines zweiten Objekts (170), das eine Richtung zum Anheben oder Absenken des Pegels darstellt, ohne das zweite Symbol (120) und das dritte Symbol (130) anzuzeigen;
Ausführen (1140) der Zoomfunktion, Modifizieren und Anzeigen (1150) des ersten Objekts (160), und Vergrößern oder Verkleinern des durch das Kameramodul (2291) erhaltenen Bildes als Reaktion auf das Identifizieren, dass sich das erste Symbol (110) gemäß einer Eingabe über die vorbestimmte Strecke hinaus in der ersten Richtung bewegt; und
Aufnehmen des Bildes, wenn die Berührungseingabe auf dem ersten Symbol (110), das sich gemäß der Berührungs- und Zieheingabe eines Benutzers bewegt, endet,
beim Empfangen einer weiteren Berührungseingabe zum Bewegen des ersten Symbols (110) in eine zweite Richtung, die sich von der ersten Richtung unterscheidet:
Ändern eines ersten Bildaufnahmemodus in einen zweiten Bildaufnahmemodus; und
Anzeigen von Objekten (720) zum Anpassen von fotografischen Elementen des zweiten Bildaufnahmemodus.

10. Verfahren nach Anspruch 9, das ferner Folgendes umfasst:
als Reaktion auf die Bewegung des ersten Symbols (110) gemäß einer Berührungs- und Zieheingabe eines Benutzers, Zurückbringen des ersten Symbols (110) in eine Ausgangsposition vor der Bewegung, wenn die Berührungseingabe auf dem ersten Symbol (110) endet.

11. Verfahren nach Anspruch 9, das ferner Folgendes umfasst:
Beenden der Anzeige des ersten Objekts (160), wenn die Berührungseingabe auf dem ersten Symbol (110) endet.

12. Verfahren nach Anspruch 9, wobei das zweite Objekt (170) in einen ersten Abschnitt (171) und einen zweiten Abschnitt (172) unterteilt ist,
wobei der erste Abschnitt (171) von dem Punkt, an dem das Minuszeichen angezeigt wird, bis zu dem Punkt reicht, an dem das erste Symbol (110) sich zuerst befindet, und der zweite Abschnitt (172) von dem Punkt, an dem das Pluszeichen angezeigt wird, bis zu dem Punkt reicht, an dem das erste Symbol (110) sich zuerst befindet,
wobei das Verfahren ferner Folgendes umfasst:
wenn sich das erste Symbol (110) zum Startzeitpunkt der Anzeige des zweiten Objekts (170) in dem zweiten Abschnitt (172) befindet:
Erhöhen des Pegels der Zoomfunktion, wenn sich das erste Symbol (110) in dem zweiten Abschnitt (172) zu dem Punkt hin bewegt, an dem das Pluszeichen angezeigt wird,
Beibehalten des Pegels der Zoomfunktion, wenn sich das erste Symbol (110) in dem zweiten Abschnitt (172) in Richtung des ersten Abschnitts (171) bewegt, und
Verringern des Pegels der Zoomfunktion, wenn das erste Symbol (110) in den ersten Abschnitt (171) eintritt.

## Revendications

1. Appareil électronique (100), comprenant :
un module de caméra (2291),
un dispositif d'affichage (210) comprenant un écran tactile qui est conçu pour recevoir une entrée tactile,
au moins un processeur (230), et
une mémoire (220) conçue pour stocker des instructions qui, lorsqu'elles sont exécutées par l'appareil électronique (100), amènent le ou les processeurs (230) à :
commander (1110) le dispositif d'affichage (210) de façon qu'il affiche une image obtenue par le biais du module caméra (2291), une première icône (110) relative à une fonction de prise de l'image obtenue par le biais du module caméra (2291), une deuxième icône (120) visant à enregistrer une vidéo, et une troisième icône (130) visant à confirmer les images prises,
ladite mémoire (220) étant conçue pour stocker des instructions qui, lorsqu'elles sont exécutées par l'appareil électronique (100), amènent le ou les processeurs (230) à :
lors de la réception d'une entrée tactile visant à déplacer la première icône (110) selon une distance prédéterminée dans une première direction :
activer (1120) une fonction de zoom et commander le dispositif d'affichage de façon qu'il affiche (1130) un premier objet (160) représentant un niveau de la fonction de zoom appliquée à l'image et un deuxième objet (170) représentant une direction selon laquelle le niveau peut s'élever ou s'abaisser, sans afficher la deuxième icône (120) et la troisième icône (130),
exécuter (1140) la fonction de zoom, commander le dispositif d'affichage (210) de façon qu'il modifie et affiche (1150) le premier objet (160), et qu'il agrandisse ou réduise l'image obtenue par le biais du module de caméra (2291), en réaction à l'identification du fait que la première icône (110) est déplacée en fonction de l'entrée tactile au-delà de la distance prédéterminée dans la première direction, et
prendre l'image lorsque l'entrée tactile réalisée par l'utilisateur par toucher-glisser sur la première icône (110) prend fin,
lors de la réception d'une autre entrée tactile visant à déplacer la première icône (110) dans une deuxième direction qui est différente de la première direction :
passer d'un premier mode de prise d'image à un deuxième mode de prise d'image, et
afficher des objets (720) permettant d'ajuster des éléments photographiques du deuxième mode de prise d'image.

2. Appareil électronique selon la revendication 1,
dans lequel la mémoire (220) est en outre conçue pour stocker des instructions qui, lorsqu'elles sont exécutées par l'appareil électronique (100), amènent le ou les processeurs (230) à renvoyer la première icône (110) à une position initiale d'avant son déplacement lorsque l'entrée tactile réalisée par l'utilisateur par toucher-glisser sur la première icône (110) prend fin.

3. Appareil électronique selon la revendication 1,
dans lequel la mémoire (220) est en outre conçue pour stocker des instructions qui, lorsqu'elles sont exécutées par l'appareil électronique (100), amènent le ou les processeurs (230) à mettre fin à l'affichage du premier objet (160) lorsque l'entrée tactile réalisée par l'utilisateur par toucher-glisser sur la première icône (110) prend fin.

4. Appareil électronique selon la revendication 1, dans lequel le deuxième objet (170) est divisé en une première section (171) et une deuxième section (172),
ladite première section (171) s'étendant du point où est affiché le signe moins jusqu'au point où est tout d'abord située la première icône (110), et ladite deuxième section (172) s'étendant du point où est affiché le signe plus jusqu' au point où est tout d'abord située la première icône (110),
ladite mémoire (220) étant en outre conçue pour stocker des instructions qui, lorsqu'elles sont exécutées par l'appareil électronique (100), amènent le ou les processeurs (230) à effectuer les opérations suivantes lorsque la première icône (110) est située dans la deuxième section (172) à l'instant où commence à s'afficher le deuxième objet (170) :
augmenter le niveau de la fonction zoom lorsque la première icône (110) est déplacée dans la deuxième section (172) vers le point où est affiché le signe plus,
maintenir le niveau de la fonction zoom lorsque la première icône (110) est déplacée dans la deuxième section (172) vers la première section (171), et
diminuer le niveau de la fonction zoom lorsque la première icône (110) entre dans la première section (171).

5. Appareil électronique selon la revendication 1, dans lequel la mémoire (220) est en outre conçue pour stocker des instructions qui, lorsqu'elles sont exécutées par l'appareil électronique (100), amènent le ou les processeurs (230) à passer du deuxième mode de prise d'image au premier mode de prise d'image en réaction à l'identification du fait que la première icône (110) est déplacée, conformément à une autre entrée tactile, dans la deuxième direction.

6. Appareil électronique selon la revendication 1, dans lequel la mémoire (220) est en outre conçue pour stocker des instructions qui, lorsqu'elles sont exécutées par l'appareil électronique (100), amènent le ou les processeurs (230) à :
commander le dispositif d'affichage (210) de façon qu'il affiche au moins un objet (920) visant à sélectionner la résolution de la vidéo et/ou un objet (910) visant à sélectionner une fréquence d'images de la vidéo, en réaction à l'identification du fait que la deuxième icône (120) est déplacée, conformément à une autre entrée tactile, selon une distance prédéterminée.

7. Appareil électronique selon la revendication 1, dans lequel la mémoire (220) est en outre conçue pour stocker des instructions qui, lorsqu'elles sont exécutées par l'appareil électronique (100), amènent le ou les processeurs (230) à :
commander le dispositif d'affichage (210) de façon qu'il affiche au moins un dossier (1010) dans lequel est stockée une image qui a été prise, en réaction à l'identification du fait que la troisième icône (130) est déplacée, conformément à ladite entrée, selon une distance prédéterminée.

8. Appareil électronique selon la revendication 1, dans lequel la mémoire (220) est en outre conçue pour stocker des instructions qui, lorsqu'elles sont exécutées par l'appareil électronique (100), amènent le ou les processeurs (230) à déplacer la première icône (110) ou à faire afficher une icône (110') remplissant une même fonction que la première icône (110) en une position décalée, en réaction à l'identification du fait que la première icône (110) est déplacée conformément à l'entrée tactile dans une troisième direction qui est différente de la première direction et d'une deuxième direction.

9. Procédé de commande d'un appareil électronique (100), le procédé comprenant :
l'affichage (1110) d'une image obtenue par l'intermédiaire d'un module de caméra (2291), d'une première icône (110) relative à une fonction de prise d'image, d'une deuxième icône (120) visant à enregistrer une vidéo et d'une troisième icône (130) visant à confirmer les images prises,
moyennant quoi le procédé comprend les opérations consistant à :
lors de la réception d'une entrée tactile visant à déplacer la première icône (110) selon une distance prédéterminée dans une première direction :
activer (1120) une fonction zoom et afficher (1130) un premier objet (160) représentant un niveau de la fonction zoom appliquée à l'image et un deuxième objet (170) représentant une direction selon laquelle le niveau peut s'élever ou s'abaisser, sans afficher la deuxième icône (120) et la troisième icône (130),
exécuter (1140) la fonction de zoom, modifier et afficher (1150) le premier objet (160), et agrandir ou réduire l'image obtenue par le biais du module de caméra (2291), en réaction à l'identification du fait que la première icône (110) est déplacée, conformément à une entrée, au-delà de la distance prédéterminée dans la première direction, et
prendre l'image lorsque l'entrée tactile réalisée par l'utilisateur par toucher-glisser sur la première icône (110) prend fin,
lors de la réception d'une autre entrée tactile visant à déplacer la première icône (110) dans une deuxième direction qui est différente de la première direction :
passer d'un premier mode de prise d'image à un deuxième mode de prise d'image, et
afficher des objets (720) permettant de régler des éléments photographiques du deuxième mode de prise d'image.

10. Procédé selon la revendication 9, comprenant en outre :
en réaction au déplacement de la première icône (110) conformément à une entrée par toucher-glisser d'un utilisateur, le renvoi de la première icône (110) à une position initiale d'avant son déplacement lorsque l'entrée tactile réalisée sur la première icône (110) prend fin.

11. Procédé selon la revendication 9, comprenant en outre :
l'interruption de l'affichage du premier objet (160) lorsque l'entrée tactile réalisée sur la première icône (110) prend fin.

12. Procédé selon la revendication 9, dans lequel le deuxième objet (170) est divisé en une première section (171) et une deuxième section (172),
ladite première section (171) s'étendant du point où est affiché le signe moins jusqu'au point où est tout d'abord située la première icône (110), et ladite deuxième section (172) s'étendant du point où est affiché le signe plus jusqu' au point où est tout d'abord située la première icône (110),
le procédé comprenant en outre les opérations suivantes consistant à :
lorsque la première icône (110) est située dans la deuxième section (172) à l'instant où commence à s'afficher le deuxième objet (170) :
augmenter le niveau de la fonction zoom lorsque la première icône (110) est déplacée dans la deuxième section (172) vers le point où est affiché le signe plus,
maintenir le niveau de la fonction zoom lorsque la première icône (110) est déplacée dans la deuxième section (172) vers la première section (171), et
diminuer le niveau de la fonction zoom lorsque la première icône (110) entre dans la première section (171).
